(19) Europäisches Patentamt
European Patent Office
Office européen des brevets

(11) **EP 2 972 086 B1**

(12) **FASCICULE DE BREVET EUROPEEN**

(45) Date de publication et mention de la délivrance du brevet:
**16.01.2019 Bulletin 2019/03**

(21) Numéro de dépôt: **14715353.0**

(22) Date de dépôt: **10.03.2014**

(51) Int Cl.:
***G01C 19/72*** *(2006.01)*

(86) Numéro de dépôt international:
**PCT/FR2014/050540**

(87) Numéro de publication internationale:
**WO 2014/140466 (18.09.2014 Gazette 2014/38)**

(54) **DISPOSITIF DE MESURE INTERFEROMETRIQUE A FIBRE OPTIQUE COMPORTANT UN RESONATEUR EN ANNEAU, GYROMETRE ET CENTRALE D'ATTITUDE OU DE NAVIGATION INERTIELLE COMPORTANT UN TEL DISPOSITIF**

INTERFEROMETRISCHE GLASFASER-MESSVORRICHTUNG MIT EINEM RINGRESONATOR, GYROMETER UND TRÄGHEITSHALTUNG ODER NAVIGATIONSEINHEIT MIT SOLCH EINER VORRICHTUNG

FIBRE-OPTIC INTERFEROMETRIC MEASUREMENT DEVICE COMPRISING A RING RESONATOR, GYROMETER AND INERTIAL ATTITUDE OR NAVIGATION UNIT COMPRISING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2013 FR 1352161**

(43) Date de publication de la demande:
**20.01.2016 Bulletin 2016/03**

(73) Titulaire: **IXBLUE**
**78100 Saint-Germain-en-Laye (FR)**

(72) Inventeurs:
* **LEFEVRE, Hervé**
  **F-75007 Paris (FR)**
* **GUATTARI, Frédéric**
  **F-93300 Aubervilliers (FR)**
* **MOLUCON, Cédric**
  **F-75007 Paris (FR)**
* **HONTHAAS, Joachin**
  **F-75017 Paris (FR)**
* **DUCLOUX, Eric**
  **F-92500 Rueil Malmaison (FR)**
* **BONNEFOIS, Jean-Jacques**
  **91570 Bievres (FR)**

(74) Mandataire: **Jacobacci Coralis Harle**
**32, rue de l'Arcade**
**75008 Paris (FR)**

(56) Documents cités:
* **Jeng-Nan Juang ET AL: "EVALUATION OF RING LASER AND FIBER OPTIC GYROSCOPE TECHNOLOGY", , 3 février 2011 (2011-02-03), XP055094113, Extrait de l'Internet: URL:http://www.asee.org/documents/sections /middle-atlantic/fall-2009/01-Evaluation-O f-Ring-Laser-And-Fiber-Optic-Gyroscope-Tec hnology.pdf [extrait le 2013-12-18]**
* **XIJING WANG ET AL: "Resonator fiber optic gyro with bipolar digital Serrodyne Modulation Scheme", PROCEEDINGS OF SPIE, vol. 8421, 15 octobre 2012 (2012-10-15), pages 84210A-84210A-4, XP055094121, ISSN: 0277-786X, DOI: 10.1117/12.2005968 cité dans la demande**
* **HAJIME KATO ET AL: "Shupe effect compensation of temperature controlled Fiber Optical Gyroscope", ADVANCED MOTION CONTROL, 2010 11TH IEEE INTERNATIONAL WORKSHOP ON, IEEE, PISCATAWAY, NJ, USA, 21 mars 2010 (2010-03-21), pages 262-267, XP031675968, ISBN: 978-1-4244-6668-9**

**Description**

La présente invention concerne un dispositif de mesure interférométrique à fibre optique destiné à mesurer un paramètre physique.

Elle concerne plus particulièrement un dispositif de mesure interférométrique comportant un interféromètre de SAGNAC qui comprend des moyens de mesure sensibles au paramètre physique à mesurer.

L'invention trouve une application particulièrement avantageuse dans la réalisation d'un gyromètre comprenant un tel dispositif de mesure interférométrique et dans la réalisation d'une centrale d'attitude ou de navigation inertielle utilisant un tel gyromètre.

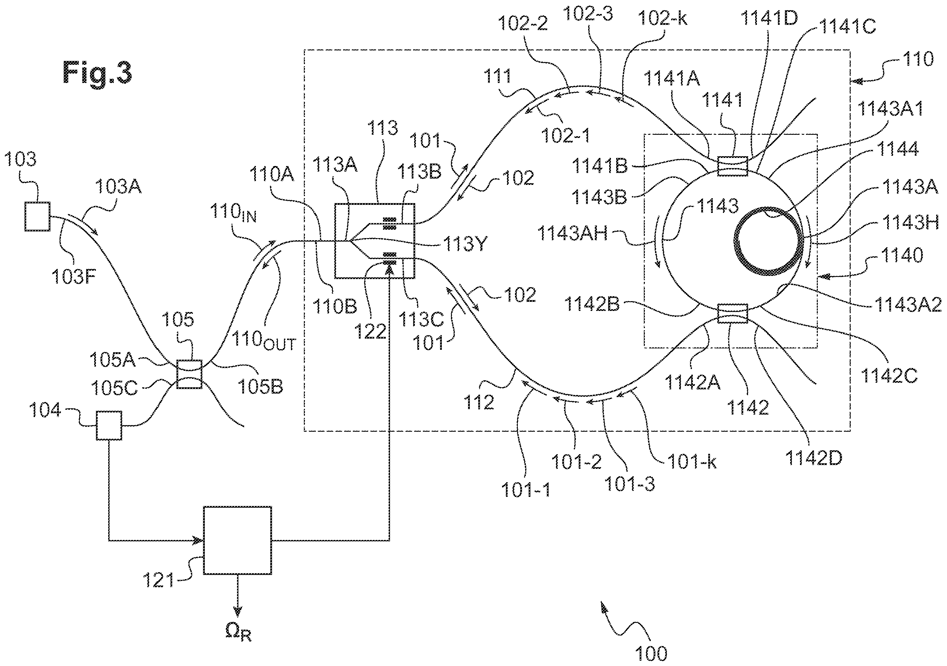

On connaît du document « *The Fiber-Optic Gyroscope »* (H. LEFEVRE, Artech House, 1993-voir notamment figure 3.26 page 54) un dispositif de mesure interférométrique à fibre optique destiné à mesurer un paramètre physique.

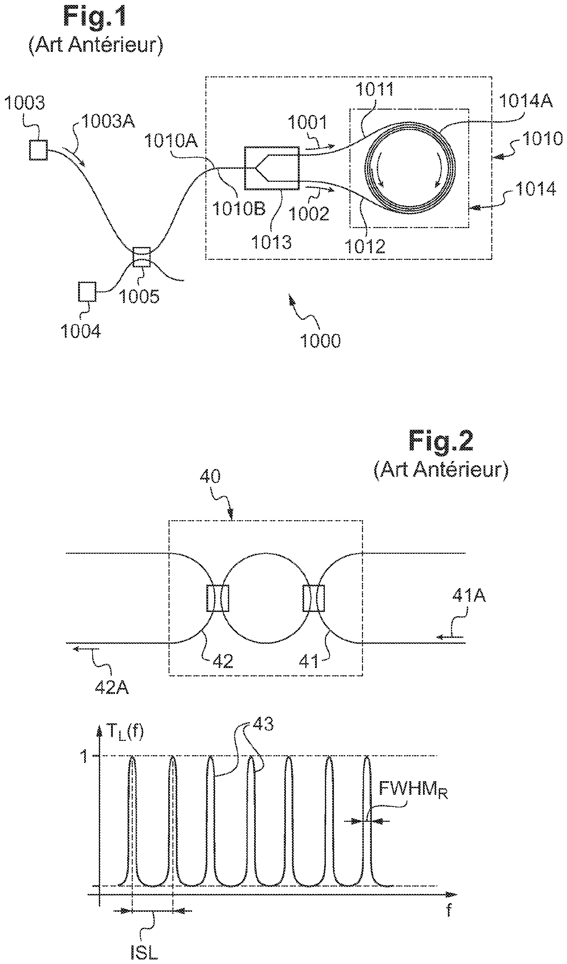

Comme reproduit sur la figure 1, ce dispositif de mesure interférométrique 1000 comporte :

- une source lumineuse 1003 émettant un signal lumineux source 1003A,
- un interféromètre de SAGNAC 1010 à fibre optique, dans lequel se propagent une première onde lumineuse 1001 et une deuxième onde lumineuse 1002 contra-propagatives, ledit interféromètre de SAGNAC 1010 comprenant :

    - un port d'entrée 1010A recevant, dans un sens aller, un signal lumineux d'entrée,
    - un séparateur 1013 connecté, d'une part, audit port d'entrée 1010A et, d'autre part, à un premier bras 1011 et à un deuxième bras 1012 dudit interféromètre de SAGNAC 1010,
    - des moyens de mesure 1014 sensibles audit paramètre physique à mesurer, ledit paramètre physique engendrant une différence de phase non réciproque $\Delta\phi_p$, fonction dudit paramètre physique, entre lesdites deux ondes lumineuses 1001, 1002 contra-propagatives, et
    - un port de sortie 1010B, commun avec ledit port d'entrée 1010A, transmettant, dans un sens retour opposé au sens aller, un signal lumineux de sortie présentant une puissance lumineuse de sortie qui est fonction de la différence de phase totale $\Delta\phi_t$, entre lesdites deux ondes lumineuses contra-propagatives,

- un détecteur de rayonnement optique 1004, recevant ladite puissance lumineuse de sortie sortant dudit interféromètre de SAGNAC 1010 et délivrant un signal électrique représentatif de la puissance lumineuse de sortie, et
- un coupleur de source 1005 qui couple, dans ledit sens aller, ladite source lumineuse 1003 audit port d'entrée 1010A de l'interféromètre de SAGNAC 1010, et dans ledit sens retour, ledit port de sortie 1010B de l'interféromètre de SAGNAC 1010 audit détecteur 1004.

Un tel dispositif de mesure interférométrique 1000 peut par exemple être utilisé dans un gyromètre interférométrique à fibre optique (*« Interferometric Fiber-Optic Gyroscope»* ou « I-FOG » en anglais).

De manière connue, et comme représenté sur la figure 1, les moyens de mesure 1014 du dispositif de mesure interférométrique 1000 selon l'art antérieur peuvent comprendre une bobine-capteur de rotation 1014A de fibre optique.

De manière avantageuse, le signal lumineux source 1003A émis par la source lumineuse 1003 présente un spectre large, c'est-à-dire que cette source lumineuse 1003 a une faible cohérence temporelle. De cette façon, on s'affranchit des effets parasites optiquement cohérents, tels que la rétrodiffusion cohérente ou le couplage de polarisations croisées dans les fibres optiques, pouvant perturber le dispositif de mesure interférométrique 1000 selon l'art antérieur. On supprime également ainsi l'effet KERR non linéaire.

De manière générale, les performances du dispositif de mesure interférométrique 1000 selon l'art antérieur, en particulier sa sensibilité et son rapport signal à bruit, sont d'autant meilleures que la longueur de la bobine-capteur de rotation 1014A est grande.

Cependant, l'augmentation de la longueur de la bobine-capteur 1014A rend le dispositif de mesure interférométrique 1000 non seulement plus coûteux, mais aussi plus sensible aux variations thermiques par effet SHUPE.

Ainsi, il est nécessaire de parvenir à un compromis sur la longueur de la bobine-capteur de rotation 1014A de l'interféromètre de SAGNAC.

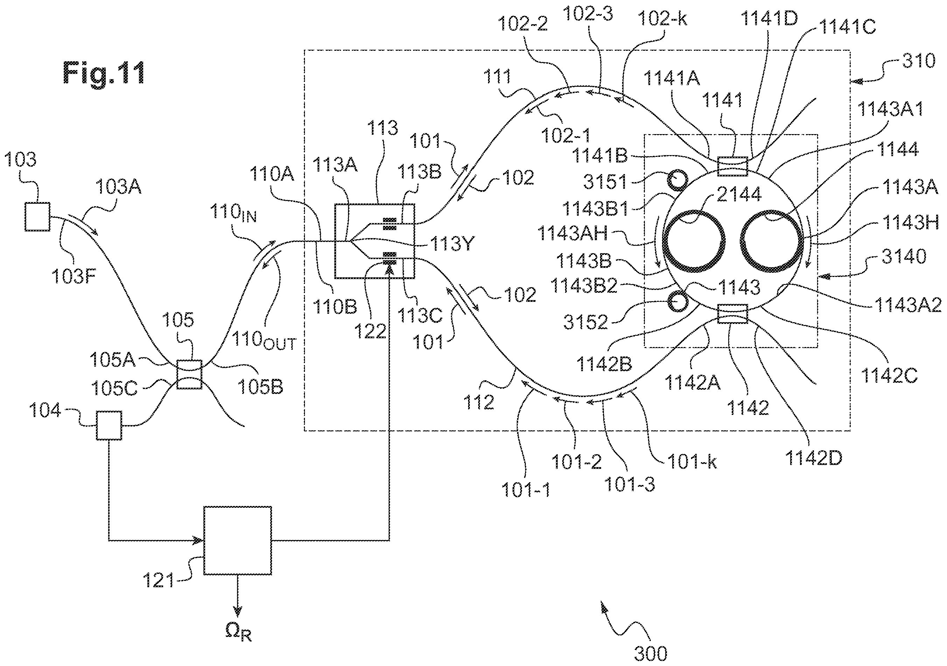

Par ailleurs, on connaît du même document (voir par exemple paragraphe 11.1 et figure 11.1 pages 159 à 161) un gyromètre résonant à fibre optique ou « R-FOG » (*« Resonant FOG »* en anglais) dans lequel les moyens de mesure comprennent un résonateur en anneau à fibre optique en mode de transmission.

Selon l'art antérieur, et comme cela est représenté sur la figure 2, un tel résonateur en anneau 40 comporte une première porte 41 et une deuxième porte 42.

De manière connue, un signal lumineux incident 41A sur la première porte 41, appelée alors porte d'entrée, parcourt le résonateur en anneau 40 qui transmet alors un signal lumineux transmis 42A sur la deuxième porte 42, appelée alors porte de sortie transmise.

Comme cela est représenté sur la figure 2, un tel résonateur en anneau 40 à fibre optique en mode de transmission présente généralement une courbe de réponse $T_L(f)$, en fréquence (en hertz), au niveau de sa porte de sortie transmise 42 avec des pics de résonance 43 en transmission.

Cette réponse classique du résonateur en anneau 40, qui correspond au rapport entre la puissance du signal lumineux transmis 42A et la puissance du signal lumineux incident 41A, peut être caractérisée par la donnée :

- de l'intervalle spectral libre ISL correspondant à la distance, en fréquence, entre deux pics de résonance 43 successifs, et
- de la finesse F correspondant au rapport entre l'intervalle spectral libre ISL du résonateur en anneau 40 et la pleine largeur à mi-hauteur, en fréquence, notée $FWHM_R(f)$ des pics de résonance 43 de la courbe de réponse $T_L(f)$ : ceux-ci sont donc d'autant plus fins, que la finesse F du résonateur en anneau 40 est grande (à intervalle spectral libre ISL donné).

Théoriquement, un R-FOG utilisant un résonateur en anneau de longueur totale $L_R$ et de finesse F, pourrait atteindre les mêmes performances qu'un I-FOG ayant une bobine-capteur de rotation de fibre optique de longueur F/2 fois plus grande, à savoir $F*L_R/2$.

En effet, l'effet SHUPE dans un R-FOG utilisant un résonateur en anneau est réduit par rapport à un I-FOG du fait qu'il utilise une bobine de fibre optique plus courte (voir par exemple Wang et al., « Resonator Fiber-Optic Gyro with Bipolar Digital Serrodyne Modulation Scheme », in OFS 2012, 22nd International Conference on Optical Fiber Sensors, Beijing, Proceedings of SPIE, Vol. 8421, 2012).

Cependant, pour présenter un intérêt, le R-FOG utilisant un résonateur en anneau 40 selon l'art antérieur ne peut pas utiliser une source lumineuse à spectre large. Le résonateur en anneau 40 selon l'art antérieur doit nécessairement être utilisé en combinaison avec une source lumineuse à spectre étroit.

On considérera ici qu'une source lumineuse est à spectre étroit lorsque la pleine largeur à mi-hauteur $FWHM_S$, en longueur d'onde (par exemple en nanomètres ou nm) ou en fréquence (par exemple en térahertz ou THz), du spectre de cette source lumineuse est telle que : $FWHM_S < ISL/(10*F)$, l'intervalle spectral libre ISL étant alors exprimé en longueur d'onde ou en fréquence.

En d'autres termes, une source lumineuse sera à spectre étroit si la pleine largeur à mi-hauteur $FWHM_S$ de cette source lumineuse est au plus dix fois plus petite que la pleine largeur à mi-hauteur $FWHM_R$ des pics de résonance du résonateur en anneau 40, c'est-à-dire si $FWHM_S < FWHM_R/10$.

Une telle source lumineuse à spectre étroit présente par principe une grande cohérence temporelle, caractérisée par une longueur de cohérence $L_{coh}$.

Cette longueur de cohérence $L_{coh}$, pour la source lumineuse à spectre étroit utilisée en combinaison avec un résonateur en anneau de longueur totale $L_R$ et de finesse F, est, de préférence, supérieure à dix fois le produit de la longueur totale $L_R$ par la finesse F, soit :

$$L_{coh} > 10*F*L_R.$$

En pratique, l'utilisation d'une source lumineuse de grande cohérence temporelle ne permet pas d'atteindre de très hautes performances à cause d'effets parasites cohérents tels que la rétrodiffusion RAYLEIGH et le couplage de polarisations croisées, ainsi qu'à cause de l'effet KERR non linéaire.

En particulier, un gyromètre résonant utilisant une telle source lumineuse présente une dérive long terme gênante quant à la précision des mesures sur de longues durées.

Afin de remédier aux inconvénients précités de l'état de la technique, la présente invention propose un dispositif de mesure interférométrique permettant d'utiliser une source lumineuse à spectre large et des moyens de mesure à fibre optique de longueur modérée dans ce dispositif de mesure interférométrique afin de s'affranchir des effets cohérents de la source lumineuse et de réduire l'effet SHUPE pour atteindre de très hautes performances.

Plus précisément, l'invention concerne un dispositif de mesure interférométrique à fibre optique destiné à mesurer un paramètre physique et comportant :

- une source lumineuse à spectre large émettant un signal lumineux source,
- un interféromètre de SAGNAC à fibre optique, dans lequel se propagent une première onde lumineuse et une deuxième onde lumineuse contra-propagatives, ledit interféromètre de SAGNAC comprenant :

  - un port d'entrée recevant, dans un sens aller, un signal lumineux d'entrée,
  - un séparateur connecté, d'une part, audit port d'entrée et, d'autre part, à un premier bras et à un deuxième bras dudit interféromètre de SAGNAC,

- des moyens de mesure sensibles audit paramètre physique à mesurer, ledit paramètre physique engendrant une différence de phase non réciproque $\Delta\phi_p$, fonction dudit paramètre physique, entre lesdites deux ondes lumineuses contra-propagatives, et
  - un port de sortie, commun avec ledit port d'entrée, transmettant, dans un sens retour opposé au sens aller, un signal lumineux de sortie présentant une puissance lumineuse de sortie fonction de la différence de phase totale $\Delta\phi_t$, entre lesdites deux ondes lumineuses contra-propagatives et du paramètre physique à mesurer,

- un détecteur de rayonnement optique, recevant ladite puissance lumineuse de sortie sortant dudit interféromètre de SAGNAC et délivrant un signal électrique représentatif de la puissance lumineuse de sortie, et
- un coupleur de source qui couple, dans ledit sens aller, ladite source lumineuse audit port d'entrée de l'interféromètre de SAGNAC, et dans ledit sens retour, ledit port de sortie de l'interféromètre de SAGNAC audit détecteur.

Selon l'invention, lesdits moyens de mesure de l'interféromètre de SAGNAC comportent un résonateur en anneau à fibre optique en mode de transmission, ledit résonateur en anneau comprenant un premier coupleur, respectivement un deuxième coupleur, qui couple le premier bras, respectivement le deuxième bras, dudit interféromètre de SAGNAC audit résonateur en anneau, de sorte que lesdites première et deuxième ondes lumineuses dans ledit résonateur en anneau circulent dans des sens de propagation opposés.

Ainsi, grâce à l'utilisation dudit résonateur en anneau à fibre optique dans les moyens de mesure, le dispositif de mesure interférométrique selon l'invention permet d'atteindre de très hautes performances sans être limité par l'effet SHUPE ni par les effets de cohérence.

En d'autres termes, le dispositif de mesure interférométrique selon l'invention présente :

- des performances sensiblement équivalentes à celles d'un dispositif de mesure interférométrique selon l'art antérieur utilisant une bobine-capteur de rotation de longueur $F*L_R/2$, où $F$ et $L_R$ sont respectivement la finesse et la longueur totale du résonateur en anneau utilisé dans le dispositif de mesure interférométrique selon l'invention, et
- un effet SHUPE réduit sensiblement équivalent à celui présent dans un R-FOG utilisant un résonateur en anneau de même longueur.

Par ailleurs, comme la longueur de fibre optique utilisée dans le dispositif de mesure interférométrique selon l'invention est plus faible (environ F/2 fois plus faible), le coût d'un tel dispositif de mesure interférométrique à fibre optique est moindre.

Enfin, malgré l'utilisation de ce résonateur en anneau, il est quand même possible d'utiliser la source lumineuse à spectre large, ce qui permet notamment de s'affranchir des effets parasites d'une source à spectre étroit, tels que la rétrodiffusion RAYLEIGH, les couplages de polarisations croisées et l'effet KERR non linéaire.

On considérera ici qu'une source lumineuse est à spectre large par comparaison de ses propriétés optiques à celles d'un résonateur en anneau. Plus précisément, selon l'invention, la source lumineuse est à spectre large lorsque la pleine largeur à mi-hauteur $FWHM_S$, en fréquence optique, du spectre de cette source lumineuse est supérieure ou égale à dix fois l'intervalle spectral libre ISL du résonateur en anneau, c'est-à-dire : $FWHM_S \geq 10$ ISL.

En pratique, le spectre de la source lumineuse présente une pleine largeur à mi-hauteur $FWHM_S$ très supérieure, supérieure à un million mille fois l'intervalle spectral libre ISL du résonateur en anneau, c'est-à-dire : $FWHM_S \geq 10^6*ISL \gg ISL$.

Par ailleurs, d'autres caractéristiques avantageuses et non limitatives du dispositif de mesure interférométrique selon l'invention sont les suivantes :

- ledit résonateur en anneau comprend au moins une première bobine de fibre optique située sur une première portion du résonateur en anneau, entre ledit premier coupleur et ledit deuxième coupleur ;
- ledit résonateur en anneau comprend une deuxième bobine de fibre optique, de même longueur L que la première bobine de fibre optique, située sur une deuxième portion dudit résonateur en anneau, lesdites première et deuxième bobines de fibre optique étant séparées par ledit premier coupleur et ledit deuxième coupleur ;
- ledit résonateur en anneau comprend deux portions additionnelles de fibre optique dont la somme des longueurs est égale à 2*L', L' étant la somme des longueurs desdits premier et deuxième bras de l'interféromètre de SAGNAC déterminée respectivement entre ledit séparateur et lesdits premier et deuxième coupleurs, lesdites deux portions additionnelles étant disposées de part et d'autre de ladite deuxième bobine de fibre optique, entre ladite deuxième bobine et l'un desdits premier et deuxième coupleurs ;

- ledit dispositif de mesure interférométrique comporte une chaîne de modulation adaptée à moduler ladite puissance lumineuse de sortie $P_{OUT}$ sortant dudit interféromètre de SAGNAC, ladite chaîne de modulation comprenant un modulateur de phase disposé au niveau du séparateur, sur le premier et le deuxième bras de l'interféromètre de SAGNAC, pour introduire, entre ledit sens aller et ledit sens retour, un déphasage de modulation $\phi_m$ sur chacune desdites première et deuxième ondes lumineuses se propageant dans lesdits premier et deuxième bras ;

- ledit déphasage de modulation $\phi_m$ présente une composante de déphasage de mise au biais $\phi_b$ à une fréquence propre $f_p(L)$, fonction de la longueur L de ladite première bobine de fibre optique ;
- ledit déphasage de modulation $\phi_m$ présente une composante de déphasage de mise au biais $\phi_b$ à une fréquence propre $f_p(L+L')$, fonction de la longueur L+L' ;
- ledit déphasage de modulation $\phi_m$ présente une composante de déphasage de contre-réaction $\phi_r$ qui est une modulation en marches d'escalier de durée $\tau_g(L)$, fonction de la longueur L de ladite première bobine de fibre optique. Cette durée $\tau_g(L)$ correspond sensiblement au temps de propagation des ondes lumineuses contra-propagatives dans l'interféromètre de SAGNAC après un passage dans la première bobine de fibre optique du résonateur en anneau.

La présente invention trouve une application particulièrement avantageuse dans la réalisation d'un gyromètre à fibre optique comportant un dispositif de mesure interférométrique destiné à mesurer la vitesse de rotation autour d'un axe de rotation perpendiculaire au plan de l'interféromètre de SAGNAC.

Ainsi, la présente invention concerne également un gyromètre comportant un dispositif de mesure interférométrique conforme à l'invention, le paramètre physique à mesurer étant une composante de la vitesse de rotation dudit gyromètre autour d'un axe de rotation, la variation de la différence de phase non réciproque $\Delta\phi_p$ étant produite par le paramètre physique à mesurer par effet SAGNAC.

La présente invention concerne par ailleurs une centrale d'attitude ou de navigation inertielle comportant au moins un tel gyromètre.

La présente invention concerne enfin un capteur de courant électrique ou de champ magnétique comportant un dispositif de mesure interférométrique conforme à l'invention, la variation de la différence de phase étant produite par le paramètre à mesurer par effet FARADAY.

La description qui va suivre en regard des dessins annexés, donnés à titre d'exemples non limitatifs, fera bien comprendre en quoi consiste l'invention et comment elle peut être réalisée.

Les explications associées permettent de comprendre les avantages des différents modes de réalisation.

Sur les dessins annexés :

- la figure 1 représente une vue schématique d'un dispositif de mesure interférométrique selon l'art antérieur comprenant une bobine-capteur de rotation ;
- la figure 2 est une vue schématique d'un résonateur en anneau à fibre optique en mode de transmission selon l'art antérieur et de sa courbe de transmission lumineuse, en fréquence, sur sa porte de sortie transmise ;
- la figure 3 représente une vue schématique d'un dispositif de mesure interférométrique selon un premier mode de réalisation comprenant un résonateur en anneau en mode de transmission contra-propagatif ;
- la figure 4 est une courbe représentant, en fonction de la fréquence optique $f_{opt}$, le spectre large de la source lumineuse utilisée dans tous les modes de réalisation du dispositif de mesure interférométrique selon l'invention ;
- la figure 5 est une courbe représentant le spectre lumineux, en fréquence optique, d'un signal lumineux transmis par le résonateur en anneau de la figure 3 ;
- la figure 6 représente les courbes superposées des spectres lumineux transmis en sens opposés par le résonateur en anneau du dispositif de mesure interférométrique de la figure 3 au repos ;
- la figure 7 représente les courbes décalées des spectres lumineux transmis en sens opposés par le résonateur en anneau du dispositif de mesure interférométrique de la figure 3 en mouvement de rotation ;
- la figure 8 est une courbe représentant la réponse, en puissance lumineuse, du dispositif de mesure interférométrique de la figure 3 en fonction du paramètre physique à mesurer et en l'absence de modulation ;
- la figure 9 représente la modulation de déphasage de contre-réaction utilisée dans le dispositif de mesure interférométrique de la figure 3 ;
- la figure 10 est une vue schématique d'un dispositif de mesure interférométrique selon un deuxième mode de réalisation comprenant un résonateur en anneau en mode de transmission contra-propagatif ;
- la figure 11 est une vue schématique d'un dispositif de mesure interférométrique selon un troisième mode de réalisation comprenant un résonateur en anneau en mode de transmission contra-propagatif.

En préliminaire, on notera que les éléments identiques ou similaires des différents modes de réalisation de l'invention seront, dans la mesure du possible, référencés par les mêmes signes de référence et ne seront pas décrits à chaque fois.

On a représenté sur les figures 3, 10, et 11 trois modes de réalisation d'un dispositif de mesure interférométrique 100 ; 200 ; 300 à fibre optique destiné à mesurer un paramètre physique.

Les dispositifs de mesure interférométrique 100 ; 200 ; 300 décrits ci-après comportent chacun un interféromètre de SAGNAC 110 ; 210 ; 310 à fibre optique, dans lequel se propagent une première onde lumineuse 101 et une deuxième onde lumineuse 102 qui sont contra-propagatives, c'est-à-dire que ces deux ondes lumineuses 101, 102 circulent dans des sens de propagation opposés dans l'interféromètre de SAGNAC 110 ; 210 ; 310. On décrira plus en détail par la suite les différents éléments de cet interféromètre de SAGNAC 110 ; 210 ; 310 ainsi que son fonctionnement.

Sans limitation, on considérera, dans la suite de la description, que les trois modes de réalisation particulier du dispositif de mesure interférométrique 100 ; 200 ; 300 représentés sur les figures 2, 12, et 13 font partie d'un gyromètre interférométrique à fibre optique (IFOG) dans lequel le paramètre physique à mesurer est une composante de la vitesse de rotation dudit gyromètre autour d'un axe de rotation du gyromètre. On notera $\Omega_R$ cette composante de la vitesse de rotation.

La rotation du gyromètre interférométrique à fibre optique autour de son axe de rotation engendre, entre la première onde lumineuse 101 et la deuxième onde lumineuse 102, une différence de phase non réciproque $\Delta\phi_p$ qui est produite par effet SAGNAC.

Le dispositif de mesure interférométrique 100 ; 200 ; 300 du gyromètre mesure alors la composante $\Omega_R$ de la vitesse de rotation du gyromètre à partir de la détermination de cette différence de phase non réciproque $\Delta\phi_p$.

En variante, le dispositif de mesure interférométrique peut faire partie d'un capteur de courant ou de champ magnétique. Dans ce cas, la variation de la différence de phase non réciproque $\Delta\phi_p$ entre les deux ondes lumineuses contra-propagatives se propageant dans l'interféromètre de SAGNAC est alors produite par le paramètre physique à mesurer par effet FARADAY.

Comme représenté schématiquement sur les figures 3, 10 et 11, le dispositif de mesure interférométrique 100 ; 200 ; 300 comporte tout d'abord une source lumineuse 103.

La source lumineuse 103 est ici une source lumineuse d'émission spontanée à spectre large. Il s'agit par exemple d'une source lumineuse ASE (*« Amplified Spontaneous Emission »* en anglais) à fibre optique dopée avec une terre rare, par exemple de l'erbium, telle que celles utilisées dans le domaine des télécommunications optiques.

Cette source lumineuse 103 à spectre large émet un signal lumineux source 103A dont on a représenté le spectre lumineux $S(f_{opt})$ en fonction de la fréquence optique $f_{opt}$.

Ce signal lumineux source 103A présente un spectre en forme de cloche *(« bell-shaped spectrum »* en anglais) qui :

- est centré autour d'une fréquence moyenne $f_0$ telle que $f_0 = 193,5$ THz (correspondant à une longueur d'onde moyenne $\lambda_0$ de 1,55 microns) pour laquelle la puissance émise par la source lumineuse 103 est maximale et égale à $S_0$, et
- a une pleine largeur à mi-hauteur $FWHM_S$, pour la demi-puissance lumineuse $S_0/2$, telle que $FWHM_S = 1$ THz (correspondant à une pleine largeur à mi-hauteur en longueur d'onde de source d'environ 8 nanomètres).

On verra dans la suite en quoi on pourra considérer que ce spectre lumineux est un spectre large selon l'invention.

Le signal lumineux source 103A se propage, dans un sens aller, le long d'une fibre optique source 103F couplée à la sortie de la source lumineuse 103.

Le signal lumineux source 103A se propage jusqu'à un port source 105A d'un coupleur de source 105 à fibre optique.

Comme représenté sur les figures 3, 10 et 11, le dispositif de mesure interférométrique 100 ; 200 ; 300 comporte également un interféromètre de SAGNAC 110 ; 210 ; 310 à fibre optique dont on va détailler ci-après les éléments.

Cet interféromètre de SAGNAC 110 ; 210 ; 310 comprend tout d'abord un port d'entrée 110A recevant, dans le sens aller, un signal lumineux d'entrée $110_{IN}$.

Ce port d'entrée 110A est connecté à un port d'interféromètre 105B du coupleur de source 105.

Ainsi configuré, le coupleur de source 105 couple, dans le sens aller, la source lumineuse 103 à l'interféromètre de SAGNAC 110 ; 210 ; 310 *via* son port d'entrée 110A.

En d'autres termes, le signal lumineux source 103A à spectre large émis par la source lumineuse 103 du dispositif de mesure interférométrique 100 ; 200 ; 300 est transmis, dans le sens aller, sous la forme du signal lumineux d'entrée $110_{IN}$ arrivant en entrée de l'interféromètre de SAGNAC 110 ; 210 ; 310.

Dans les modes de réalisation représentés sur les figures 3, 10 et 11, le coupleur de source 105 est un coupleur *« 2 par 2 »* (« 2x2 ») à fibre optique ou un circulateur optique.

Comme le montrent bien les figures 3, 10 et 11, l'interféromètre de SAGNAC 110 ; 210 ; 310 du dispositif de mesure interférométrique 100 ; 200 ; 300 comprend également un séparateur 113 connecté au port d'entrée 110A de l'interféromètre de SAGNAC 110 ; 210 ; 310.

Ce séparateur 113 est ici un coupleur à jonction Y 113Y en optique intégrée comportant trois ports de couplage 113A, 113B, 113C respectivement connectés au port d'entrée 110A, à un premier bras 111 et à un deuxième bras 112 de l'interféromètre de SAGNAC 110 ; 210 ; 310 (voir par exemple figures 3, 10, et 11).

Le premier bras 111 et le deuxième bras 112 de l'interféromètre de SAGNAC 110 ; 210 ; 310 sont ici formés chacun d'une portion de fibre optique, de préférence monomode et à conservation de polarisation.

En variante, le premier bras et le deuxième bras de l'interféromètre de SAGNAC pourraient par exemple être réalisés au moyen de guides d'onde en optique intégrée.

Ce séparateur 113 divise, dans le sens aller, le signal lumineux d'entrée $110_{IN}$ reçu *via* le port d'entrée 110A, d'un côté sur le premier bras 111 et, d'un autre côté, sur le deuxième bras 112.

Après séparation au niveau de la jonction 113Y du séparateur 113, le signal lumineux d'entrée $110_{IN}$ donne naissance à la première onde lumineuse 101 et à la deuxième onde lumineuse 102 qui se propagent dans un sens d'entrée respectivement dans le premier bras 111 et le deuxième bras 112 de l'interféromètre de SAGNAC 110 ; 210 ; 310.

De manière avantageuse, le séparateur 113 est ici un séparateur équilibré, dit « *50/50 »,* c'est-à-dire que les amplitudes (en module) respectives des première et deuxième ondes lumineuses 101, 102, en sortie du séparateur 113, sont égales.

Après propagation dans le sens d'entrée le long des premier et deuxième bras 111, 112, les première et deuxième ondes lumineuses 101, 102 parviennent jusqu'à des moyens de mesure 1140 ; 2140 ; 3140 de l'interféromètre de SAGNAC 110, 210, 310 (voir figures 3, 10 et 11).

Dans les différents modes de réalisation représentés sur les figures 3, 10 et 11, les moyens de mesure 1140 ; 2140 ; 3140 du dispositif de mesure interférométrique 100 ; 200 ; 300 comportent un résonateur en anneau 1143 à fibre optique.

Bien que le résonateur en anneau 1143 soit ici circulaire, toute autre géométrie d'anneau est possible. On notera $D_R$ le diamètre du résonateur en anneau 1143.

Ce résonateur en anneau 1143 comprend un premier coupleur 1141 et un deuxième coupleur 1142 à fibre optique.

Le premier coupleur 1141 et le deuxième coupleur 1142 sont ici analogues au coupleur de source 105, c'est-à-dire que ce sont des coupleurs 2x2 à quatre ports 1141A, 1141B, 1141C, 1141D, 1142A, 1142B, 1142C, 1142D.

Les quatrième ports 1141D et 1142D respectifs des premier et deuxième coupleurs 1141, 1142 sont rendus inopérants et les signaux lumineux sortant par ces ports 1141D et 1142D sont absorbés et non pas réfléchis.

De manière générale, le premier coupleur 1141 et le deuxième coupleur 1142 peuvent être placés à n'importe quel endroit le long de l'anneau du résonateur en anneau 1143.

Sans limitation, on a représenté ici (voir figures 3, 10 et 11) les premier et deuxième coupleurs 1141, 1142 sur des positions diamétralement opposées le long de l'anneau circulaire du résonateur en anneau 1143.

Ainsi disposés, le premier coupleur 1141 et le deuxième coupleur 1142 délimitent une première portion 1143A et une deuxième portion 1143B du résonateur en anneau 1143 (voir figures 3, 10, et 11), qui s'étendent chacune entre ce premier coupleur 1141 et ce deuxième coupleur 1142.

Par la suite, on notera $L_A$ et $L_B$ les longueurs respectives des première et deuxième portions 1143A, 1143B déterminées le long des première et deuxième portions 1143A, 1143B, entre le premier coupleur 1141 et le deuxième coupleur 1142.

De la même façon, on notera $L_R$ la longueur totale du résonateur en anneau 1143, qui est donc égale à la somme de la longueur $L_A$ de la première portion 1143A et de la longueur $L_B$ de la deuxième portion 1143B, soit $L_R = L_A + L_B$.

Enfin, on notera :

- $L'_A$ et $L'_B$ les longueurs respectives des premier et deuxième bras 111, 112 de l'interféromètre de SAGNAC 110 ; 210 ; 310, déterminées entre le séparateur 113, et les premier et deuxième coupleurs 1141, 1142 respectivement, et
- $L'$ la longueur totale des bras 111, 112 de l'interféromètre de SAGNAC 110 ; 210 ; 310, cette longueur totale $L'$ étant égale à la somme des longueurs respectives $L'_A$, $L'_B$ de ces deux bras 111, 112, c'est-à-dire que $L' = L'_A + L'_B$.

Dans les modes de réalisation représentés sur les figures 3, 10, et 11, les premier et deuxième bras 111, 112 de l'interféromètre de SAGNAC 110 ; 210 ; 310 sont de même longueur, de sorte que $L'_A = L'_B = L'/2$, par souci de symétrie.

En variante, le premier bras 111 et le deuxième bras 112 de l'interféromètre de SAGNAC 110 ; 210 ; 310 pourraient être de longueurs différentes ($L_A \neq L_B$), par exemple pour minimiser la cohérence des effets de couplage de polarisations croisées.

Le premier coupleur 1141, respectivement le deuxième coupleur 1142, couple le premier bras 111, respectivement le deuxième bras 112, de l'interféromètre de SAGNAC 110 ; 210 ; 310 au résonateur en anneau 1143.

Plus précisément, le premier bras 111, respectivement le deuxième bras 112, de l'interféromètre de SAGNAC 110 ; 210 ; 310 est connecté au premier port 1141A du premier coupleur 1141, respectivement au premier port 1142A du deuxième coupleur 1142.

On va décrire ci-après le parcours de la première onde lumineuse 101 à travers le résonateur en anneau 1143 de l'interféromètre de SAGNAC 110 ; 210 ; 310, étant entendu que, étant donné la configuration de l'interféromètre de SAGNAC 110 ; 210 ; 310 dans les différents modes de réalisation (voir figures 3, 10, et 11), la deuxième onde lumineuse 102 parcourt un chemin opposé, c'est-à-dire effectue dans l'interféromètre de SAGNAC 110 ; 210 ; 310 un trajet en sens opposé à la première onde lumineuse 101.

La première onde lumineuse 101, qui est issue du séparateur 113 de l'interféromètre de SAGNAC 110 ; 210 ; 310, se propage dans le sens d'entrée sur le premier bras 111 puis est incidente sur le premier port 1141A du premier coupleur 1141. La première onde lumineuse 101 est alors couplée dans le résonateur en anneau 1143 *via* le troisième port 1141C du premier coupleur 1141.

Ainsi, la première onde lumineuse 101 circule dans le résonateur en anneau 1143 dans un sens de circulation horaire 1143H (voir la flèche 1143H sur les figures 3, 10 et 11 qui représentent ce sens de propagation).

De manière opposée, la deuxième onde lumineuse 102 circule dans le résonateur en anneau 1143 dans un sens de circulation antihoraire 1143AH (voir également figures 3, 10 et 11). De cette façon, les première et deuxième ondes lumineuses 101, 102 dans le résonateur en anneau 1143 circulent dans des sens de propagation opposés.

Après couplage, la première onde lumineuse 101 se propage, dans le sens de propagation horaire 1143H, le long de la première portion 1143A du résonateur en anneau 1143, depuis le premier coupleur 1141 vers le deuxième coupleur 1142, plus précisément entre le troisième port 1141C du premier coupleur 1141 et le troisième port 1142C du deuxième coupleur 1142.

Après avoir parcouru cette première portion 1143A de l'anneau du résonateur en anneau 1143 dans le sens de circulation horaire 1143H - on parlera par la suite du premier passage dans le résonateur en anneau 1143 - la première onde lumineuse 101 est :

- d'une part, couplée au deuxième bras 112 de l'interféromètre de SAGNAC 110 ; 210 ; 310 *via* le premier port 1142A du deuxième coupleur 1142, pour se propager le long de ce deuxième bras 112 dans un sens de sortie, et
- d'autre part, transmise dans la deuxième portion 1143B de l'anneau du résonateur en anneau 1143 *via* le deuxième port 1142B du deuxième coupleur 1142, pour se propager toujours selon le sens de circulation horaire 1143H.

Ainsi, après son premier passage dans le résonateur en anneau 1143, la première onde lumineuse 101 aura parcouru le long de la première portion 1143A du résonateur en anneau 1143 une longueur $L_A$ de fibre optique. Il en est de même pour la deuxième onde lumineuse 102, sauf qu'au premier passage celle-ci parcourt la première portion 1143A du résonateur en anneau 1143 dans le sens de circulation antihoraire 1143AH.

Après ce premier passage, le couplage de la première onde lumineuse 101 grâce au deuxième coupleur 1142 donne donc naissance à une première onde lumineuse transmise 101-1 par le résonateur en anneau 1143, cette première onde lumineuse transmise 101-1 se propageant sur le deuxième bras 112 de l'interféromètre de SAGNAC 110 ; 210 ; 310.

Après transmission dans la deuxième portion 1143B de l'anneau du résonateur en anneau 1143, la première onde lumineuse 101 est de nouveau incidente sur le premier coupleur 1141, au niveau de son deuxième port 1141B, le premier coupleur 1141 transmettant, du deuxième port 1141B au troisième port 1141C, une partie de la première onde lumineuse 101 vers la première portion 1143A de l'anneau du résonateur en anneau 1143, l'autre partie étant couplée vers le quatrième port 1141D pour être absorbée.

La première onde lumineuse 101 circule à nouveau le long de la première portion 1143A du résonateur en anneau 1143 dans le sens de circulation horaire 1143H et effectue ainsi un deuxième passage dans le résonateur en anneau 1143, avant d'être couplée au deuxième bras 112 de l'interféromètre de SAGNAC 110 ; 210 ; 310 pour donner naissance à une deuxième onde lumineuse transmise 101-2 après le deuxième passage dans le résonateur en anneau 1143.

Ainsi, après le deuxième passage, la première onde lumineuse 101 aura parcouru dans le résonateur en anneau 1143, la longueur du premier passage, soit $L_A$, plus la longueur totale $L_R$ du résonateur en anneau 1143, soit $L_R = L_A + L_B$, soit une longueur totale de fibre optique parcourue au deuxième passage égale à $L_A + (L_A+L_B)$.

On comprend alors que la première onde lumineuse 101, et donc également la deuxième onde lumineuse 102, circulent un très grand nombre de fois dans le résonateur en anneau 1143 de l'interféromètre de SAGNAC 110 ; 210 ; 310 comme cela est le cas pour tout résonateur ou cavité en optique physique.

En d'autres termes, les première et deuxième ondes lumineuses 101, 102 contra-propagatives effectuent de multiples passages dans le résonateur en anneau 1143 des moyens de mesure 1140 ; 2140 ; 3140 de l'interféromètre de SAGNAC 110 ; 210 ; 310, la première onde lumineuse 101 dans le sens de circulation horaire 1143H et la deuxième onde lumineuse 102 dans le sens de circulation antihoraire 1143AH.

À chaque passage dans le résonateur en anneau 1143, la première onde lumineuse 101 et la deuxième onde lumineuse 102, donnent, chacune, naissance à une onde lumineuse transmise,

Dans la suite de la description, on référencera respectivement par des signes 101-k et 102-k (k étant un entier naturel non nul, soit k = 1, 2, 3, etc...) les ondes lumineuses transmises par le résonateur en anneau 1143 après le k-ième passage de la première onde lumineuse 101, respectivement de la deuxième onde lumineuse 102.

La première onde lumineuse 101 se propageant dans le sens de sortie sur le deuxième bras 112 de l'interféromètre de SAGNAC 110 ; 210 ; 310, est donc la superposition, au sens de la somme interférentielle, de la première onde lumineuse transmise 101-1 au premier passage, de la deuxième onde lumineuse transmise 101-2 au deuxième passage, de la troisième onde lumineuse transmise 101-3 au troisième passage, etc...

De la même manière, la deuxième onde lumineuse 102 se propageant dans le sens de sortie sur le premier bras 111 de l'interféromètre de SAGNAC 110 ; 210 ; 310, est la superposition de la première onde lumineuse transmise 102-1 au premier passage, de la deuxième onde lumineuse transmise 102-2 au deuxième passage, de la troisième onde lumineuse transmise 102-3 au troisième passage, etc...

Comme décrit précédemment, le premier passage correspond au parcours, en sens opposés, des ondes lumineuses 101, 102 le long de la première portion 1143A du résonateur en anneau 1143. Au deuxième passage, les ondes lumineuses 101, 102 parcourent, en plus du premier passage, une fois la deuxième portion 1143B et de nouveau encore une fois la première portion 1143A du résonateur en anneau 1143. Ainsi, au deuxième passage, les ondes lumineuses 101, 102 parcourent, en plus du premier passage, une fois la totalité du résonateur en anneau 1143.

Par itération, on comprend qu'au troisième passage les ondes lumineuses 101, 102 parcourent, en plus du premier passage, deux fois la totalité du résonateur en anneau 1143, et ainsi de suite pour les passages suivants.

Par la suite, on notera $L_k$ la longueur totale de fibre optique parcourue au k-ième passage par les première et deuxième ondes lumineuses 101, 102 dans l'interféromètre de SAGNAC 110 ; 210 ; 310, cette longueur totale $L_k$ parcourue au k-ième passage étant déterminée à partir du séparateur 113 de l'interféromètre de SAGNAC 110 ; 210 ; 310, après passage dans le résonateur en anneau 1143.

D'après les explications précédentes, on comprend donc que la longueur totale $L_k$ parcourue au k-ième passage peut s'exprimer, en fonction de la longueur $L_A$ de la première portion 1143A du résonateur en anneau 1143, de la longueur totale $L_R$ du résonateur an anneau 1143 et de la longueur totale L' des bras 111, 112 de l'interféromètre de SAGNAC 110 ; 210 ; 310 par la relation suivante : $L_k = L_A + (k-1)*L_R + L'$ (soit encore $L_k = k*L_A + (k-1)*L_B + L'$).

Ainsi, la longueur totale $L_1$ parcourue après le premier passage est donc égale à $L_A+L'$ ; la longueur totale $L_2$ parcourue après le deuxième passage est égale à $L_A+L_R+L'$, soit encore $L_2 = 2*L_A+L_B+L' = L_1 + L_R$ ; la longueur totale $L_3$ parcourue après le troisième passage est égale à $L_A+2*L_R+L'$, soit encore $L_3 = 3*L_A+2*L_B+L' = L_2+L_R = L_1+2*L_R$; *etc.*...

Les configurations du résonateur en anneau 1143 représentées sur les figures 3, 10 et 11 correspondent à des configurations connues de résonateur en anneau 1143 en mode de transmission (par opposition à d'autres configurations de résonateur en anneau en mode de réflexion).

Afin d'évaluer les amplitudes ou les puissances optiques des différentes ondes lumineuses circulant dans le résonateur en anneau 1143, il est classique d'introduire les coefficients de couplage en puissance C1, C2 respectifs et les coefficients de transmission en puissance T1, T2 respectifs des premier et deuxième coupleurs 1141, 1142.

Sans limitation, on considérera dans la suite de la description que dans les trois modes de réalisation représentés sur les figures 3, 10 et 11, les premier et deuxième coupleurs 1141, 1142 sont identiques, de sorte qu'ils présentent le même coefficient de couplage C (C = C1 = C2) et le même coefficient de transmission T (T = T1 = T2).

En variante, le premier coupleur et le deuxième coupleur pourraient par exemple être différents et, donc, présenter des caractéristiques différentes de couplage (C1 ≠ C2) et de transmission (T1 ≠ T2).

On verra dans la suite de la description que, de manière avantageuse, le coefficient de couplage C des premier et deuxième coupleurs 1141, 1142 du résonateur en anneau 1143 est faible, de préférence compris entre 5% et 30%.

De préférence, les premier et deuxième coupleurs 1141, 1142 à fibre optique présentent des pertes faibles, de sorte que l'on peut considérer que le coefficient de couplage C et le coefficient de transmission T sont liés par la relation suivante : C + T = 100%.

Ainsi, de manière avantageuse, le coefficient de transmission T des premier et deuxième coupleurs 1141, 1142 du résonateur en anneau 1143 est élevé, de préférence compris entre 95% et 70%.

Sans limitation, on considérera dans la suite de la description que le coefficient de couplage en puissance C et le coefficient de transmission en puissance T des premier et deuxième coupleurs 1141, 1142 sont ici respectivement égaux à 10% et 90%.

Comme décrit précédemment, après circulation dans le résonateur en anneau 1143 et couplage au moyen des premier et deuxième coupleurs 1141, 1142, les première et deuxième ondes lumineuses 101, 102 se propagent, dans le sens de sortie, respectivement le long du deuxième bras 112 et le long du premier bras 111 de l'interféromètre de SAGNAC 110 ; 210 ; 310 (voir figures 3, 10 et 11).

Ces deux ondes lumineuses 101, 102 sont alors recombinées par le séparateur 113 parcouru dans le sens retour.

Un signal lumineux de sortie $110_{OUT}$, présentant une puissance lumineuse de sortie $P_{OUT}$, est alors délivré par le séparateur 113 en direction d'un port de sortie 110B de l'interféromètre de SAGNAC 110 ; 210 ; 310, ce port de sortie 110B étant commun avec le port d'entrée 110A.

Ce port de sortie 110B transmet, dans le sens retour opposé au sens aller, le signal lumineux de sortie $110_{OUT}$ vers le port d'interféromètre 105B du coupleur de source 105.

En sortie de l'interféromètre de SAGNAC 110 ; 210 ; 310, la puissance lumineuse de sortie $P_{OUT}$ du signal lumineux de sortie $110_{OUT}$, qui résulte de la recombinaison interférentielle de la première onde lumineuse 101 et de la deuxième onde lumineuse 102, est fonction de la différence de phase totale $\Delta\phi_t$ entre ces deux ondes lumineuses 101, 102 contra-propagatives.

Cette différence de phase totale $\Delta\phi_t$ comporte une information relative à la différence de phase non réciproque $\Delta\phi_p$ engendrée par la variation du paramètre physique $\Omega_R$ à mesurer.

On verra dans la suite de la description que la différence de phase totale $\Delta\phi_t$ peut par ailleurs être modulée de manière à faciliter le traitement du signal lumineux de sortie $110_{OUT}$.

Comme représenté sur les figures 3, 10 et 11, le coupleur de source 105 couple, dans le sens retour, le signal lumineux de sortie $110_{OUT}$ incident sur le port d'interféromètre 105B à un détecteur 104 de rayonnement optique du dispositif de mesure interférométrique 100 ; 200 ; 300, le détecteur 104 étant connecté à un port de détecteur 105C du coupleur de source 105.

Ainsi, le coupleur de source 105 couple, dans le sens retour, le port de sortie 110B de l'interféromètre de SAGNAC 110 ; 210 ; 310 au détecteur 104,

Le détecteur 104 de rayonnement optique, recevant la puissance lumineuse de sortie $P_{OUT}(\Delta\phi_t)$ sortant de l'interféromètre de SAGNAC 110 ; 210 ; 310, délivre alors un signal électrique qui est représentatif de la puissance lumineuse de sortie $P_{OUT}(\Delta\phi_t)$.

À cet effet, dans les trois modes de réalisation représentés sur les figures 3, 10, et 11, le dispositif de mesure interférométrique 100 ; 200 ; 300 comporte une chaîne de modulation pour moduler la puissance lumineuse de sortie $P_{OUT}(\Delta\phi_t)$ sortant de l'interféromètre de SAGNAC 110 ; 210 ; 310.

La chaîne de modulation comprend un modulateur de phase 122 disposé au niveau du séparateur 113, sur les premier et deuxième bras 111, 112 de l'interféromètre de SAGNAC 110 ; 210 ; 310.

Avantageusement, le modulateur de phase 122, qui est placé dans l'interféromètre de SAGNAC 110 ; 210 ; 310, comprend ici une paire de modulateurs de phase élémentaires montés en « *push-pull* », placés respectivement à chacune des extrémités des bras 111, 112 de l'interféromètre de SAGNAC 110 ; 210 ; 310.

Les modulateurs de phase élémentaires sont ici du type électro-optique, dit à effet POCKELS, en optique intégrée sur niobate de lithium ($LiNbO_3$) par échange protonique.

Grâce au modulateur de phase 122, la chaîne de modulation introduit un déphasage de modulation $\phi_m$ sur chacune des première et deuxième ondes lumineuses 101, 102 se propageant dans les premier et deuxième bras 111, 112 de l'interféromètre de SAGNAC 110 ; 210 ; 310.

On verra dans la suite de la description, en référence aux différents modes de réalisation représentés sur les figures 3, 10 et 11, que différentes options de modulation existent permettant d'appliquer le déphasage de modulation $\phi_m$ adéquat pour obtenir la meilleure sensibilité ou le meilleur rapport signal à bruit.

La chaîne de modulation comprend par ailleurs une unité de traitement et de commande 121 qui reçoit le signal électrique délivré par le détecteur 104. En réponse à ce signal électrique, l'unité de traitement et de commande 121, d'une part, délivre, après traitement numérique du signal électrique, une mesure du paramètre physique $\Omega_R$ à mesurer, et, d'autre part, commande le modulateur de phase 122 de manière à moduler la puissance lumineuse de sortie $P_{OUT}$ de manière optimale.

On va désormais décrire plus en détail les différents modes de réalisation de l'invention représentés sur les figures 3, 10 et 11.

Dans le premier mode de réalisation, et comme cela est bien représenté sur la figure 3, le dispositif de mesure interférométrique 100 est tel que le résonateur en anneau 1143 de l'interféromètre de SAGNAC 110 comprend une première bobine 1144 qui est située sur la première portion 1143A de l'anneau du résonateur en anneau 1143, entre le premier coupleur 1141 et le deuxième coupleur 1142.

Cette première bobine 1144 est une bobine de fibre optique, de préférence monomode et à conservation de polarisation, qui s'étend sur une longueur L de fibre.

La fibre optique utilisée ici pour la première bobine 1144 est ici identique à celles utilisées pour les bras 111, 112 et le résonateur en anneau 1143 de l'interféromètre de SAGNAC 110.

De préférence, la première bobine 1144 de fibre optique présente un bobinage symétrique, par exemple un bobinage dipolaire, quadrupolaire ou octopolaire.

Dans la configuration de la figure 3, la première onde lumineuse 101 et la deuxième onde lumineuse 102 se propagent de manière contra-propagative dans l'anneau du résonateur en anneau 1143, et donc également dans la première bobine 1144.

Par ailleurs, l'adjonction de cette première bobine 1144 ne modifie pas les sens de propagation des différentes ondes lumineuses 101, 102 circulant dans le résonateur en anneau 1143 lors de leurs différents passages.

Néanmoins, la première bobine 1144 de fibre optique allonge les chemins optiques parcourus par ces deux ondes lumineuses 101, 102.

Plus précisément, la première bobine 1144, qui est située sur la première portion 1143A du résonateur en anneau 1143, modifie la longueur $L_A$ de cette première portion 1143A, qui est donc fonction de la longueur L de la première bobine 1144.

En pratique, la longueur L de la première bobine 1144 est très supérieure, par exemple cent fois plus grande, que les portions restantes 1143A1, 1143A2 de fibre optique (voir figure 3) du résonateur en anneau 1143 qui sont situées sur la première portion 1143A du résonateur en anneau 1143 respectivement, entre le premier coupleur 1141 et la première bobine 1144, et entre le deuxième coupleur 1142 et la première bobine 1144.

Ainsi, de manière générale, la longueur $L_A$ de la première portion 1143A du résonateur en anneau 1143 est très peu différente (légèrement supérieure) à la longueur L de la première bobine 1144 de fibre optique située sur cette première portion 1143A, soit $L_A \approx L$.

De plus, dans ce premier mode de réalisation, la longueur L de la première bobine 1144 de fibre optique est en pratique très supérieure à la longueur $L_B$ de la deuxième portion 1143B du résonateur en anneau 1143 ($L_B \ll L$), de sorte que la longueur totale $L_R = L_A + L_B$ du résonateur peut être assimilée, dans ce premier mode de réalisation, à la longueur L de la première bobine 1144 de fibre optique, c'est-à-dire que $L_R = L_A + L_B \approx L$.

De la même façon, la longueur L de la première bobine 1144 de fibre optique est en pratique supérieure à la longueur totale L' des premier et deuxième bras 111, 112 de l'interféromètre de SAGNAC 110 (L' ≪ L), de sorte que, en première approximation, la longueur totale $L_1$ parcourue au premier passage peut être assimilée, dans ce premier mode de réalisation, à la longueur L de la première bobine 1144 de fibre optique. En effet, comme vu précédemment, on a les relations suivantes : $L_1 = L_A + L' \approx L + L'$ car $L_A \approx L$, d'où $L_1 \approx L$ car L' ≪ L.

Ainsi constitué, le résonateur en anneau 1143 présente une courbe de transmission, en fréquence optique, semblable à celle représentée sur la figure 2. En particulier, cette courbe de transmission $T_L(f)$ présente une série de pics de résonance 43 régulièrement espacés d'une distance, en fréquence, égale à l'intervalle spectral libre ISL du résonateur en anneau 1143.

De manière connue, l'intervalle spectral libre ISL, en fréquence, du résonateur en anneau 1143 est l'inverse du temps de circulation dans le résonateur en anneau 1143. Il est donc lié à la longueur totale $L_R$ du résonateur en anneau 1143 par la relation suivante: $ISL = c/(n_{opt} {}^* L_R)$, où c et nopt sont respectivement la vitesse de la lumière dans le vide (c = 299792458 m/s) et l'indice optique de la fibre optique utilisée dans le résonateur en anneau 1143 ($n_{opt} \approx 1,5$ pour une fibre optique classique en silice).

Les pics de résonance 43 ont une pleine largeur à mi-hauteur $FWHM_R(f)$, en fréquence, égale au quotient entre l'intervalle spectral libre ISL, exprimé en fréquence, et la finesse F du résonateur en anneau 1143, soit $FWHM_R = ISL/F$.

En d'autres termes, la finesse F du résonateur en anneau 1143 est égale au rapport $ISL/FWHM_R(f)$ entre l'intervalle spectral libre ISL et la pleine largeur à mi-hauteur $FWHM_R(f)$ des pics de résonance 43 du résonateur en anneau 1143.

La finesse F du résonateur en anneau 1143 est également reliée au nombre équivalent $N_p$ de passages effectués par les ondes lumineuses 101, 102 dans le résonateur en anneau 1143 avant d'être complètement atténuées à cause des pertes intrinsèques de celui-ci.

Ceci signifie qu'au-delà du $N_p$-ième passage, la contribution des ondes lumineuses transmises (*i.e.* de toutes les ondes lumineuses transmises 101-k et 102-k pour $k > N_p$) par le résonateur en anneau 1143 aux première et deuxième ondes lumineuses 101, 102 dans leur sens de sortie est négligeable.

De manière connue, la courbe de transmission $T_L(f)$ est la fonction de réponse connue d'un résonateur en anneau 1143 comprenant deux coupleurs 1141, 1142 identiques de coefficient de couplage C et de coefficient de transmission T.

On notera par ailleurs que de manière générale cette fonction de réponse est la même :

- pour la première onde lumineuse 101 se propageant dans l'interféromètre de SAGNAC 110, et circulant dans le résonateur en anneau 1143 dans le sens de circulation horaire 1143H, et
- pour la deuxième onde lumineuse 102 se propageant dans l'interféromètre de SAGNAC 110, et circulant dans le résonateur en anneau 1143 dans le sens de circulation anti-horaire 1143AH.

Ainsi, par analogie avec une cavité de FABRY-PEROT, la courbe de réponse $T_L(f)$ s'écrit sous la forme suivante : $T_L(f) = 1/[1 + m^2 \sin^2(\pi^* f^* n_{op} {}^* L_R/c)]$, où m est le facteur d'AIRY associé au résonateur en anneau 1143, m étant lié au coefficient de couplage C et au coefficient de transmission T des premier et deuxième coupleurs 1141, 1142 à fibre optique par la relation $m^2 = 4^* T/(1-T)^2 = 4^*(1-C)/C^2$ (car C+T = 1, voir *supra*).

D'après la formule donnée ci-dessus, on retrouve de manière classique pour le résonateur en anneau 1143 que :

- la courbe de réponse $T_L(f)$ dépend de la longueur totale $L_R$ du résonateur en anneau 1143 et donc, ici, de la longueur L de la première bobine 1144 de fibre optique dans la mesure où, dans ce premier mode de réalisation, $L_R$ est sensiblement égale à L ($L_R \approx L$),
- l'intervalle spectral libre ISL, en fréquence, est égal à $c/(n_{opt} {}^* L_R) \approx c/(n_{opt} {}^* L)$, et que
- la finesse F est égale à $\pi m/2$, soit encore $F = (\pi^* T^{1/2})/(1-T) = (\pi^*(1-C)^{1/2})/C$ ($\approx 3/C$ lorsque le coefficient de couplage C est inférieur à 30%). La finesse F augmente donc avec le coefficient de transmission T des premier et deuxième coupleurs 1141, 1142.

À titre d'exemple, des coupleurs présentant des coefficients de couplage C et de transmission T tels que ceux choisis précédemment (C = 10% et T = 90%), on obtient : $m \approx 19$ ($m^2 = 360$) et $F \approx 30$ (= 3/C).

La longueur L de la première bobine 1144 étant ici de 200 mètres, l'intervalle spectral libre ISL, en fréquence, est donc égal à environ 1 MHz ($n_{opt} \approx 1,5$).

Ainsi, comme annoncé plus haut, la source lumineuse 103 est une source à spectre large car la pleine largeur à mi-hauteur $FWHM_S = 1$ THz, en fréquence optique, de la source lumineuse 103 est supérieure à dix fois l'intervalle spectral libre ISL. En effet, le rapport $FWHM_S$ / ISL est ici égal à 1 THz/1 MHz = $10^6$.

Comme cela est visible sur la figure 2, les pics de résonance 43 de la courbe de réponse $T_L(f)$ présentent :

- des valeurs maximales égales à l'unité (100% de transmission)
- des valeurs minimales de transmission qui ne sont pas nulles mais égales à $1/(1+m^2)$.

Les valeurs maximales de la courbe de transmission correspondent au cas où les ondes lumineuses ayant circulées une fois, deux fois, trois fois, etc... dans le résonateur en anneau 1143 sont transmises par celui-ci en phase, lesdites ondes lumineuses interférant alors entre elles de manière constructive.

Au contraire, les valeurs minimales de la courbe de transmission correspondent au cas où les ondes lumineuses ayant circulées une fois, deux fois, trois fois, etc... dans le résonateur en anneau 1143 sont transmises par celui-ci en opposition de phase, lesdites ondes lumineuses interférant alors entre elles de manière destructive.

Le contraste des pics de résonance, c'est-à-dire le rapport entre la différence et la somme des valeurs maximale et minimale des pics de résonance, est égal à $m^2/(m^2+2)$.

Ainsi, d'après les formules précédentes, on comprend que le contraste augmente si le coefficient de transmission T des coupleurs 1141, 1142 du résonateur en anneau 1143 augmente.

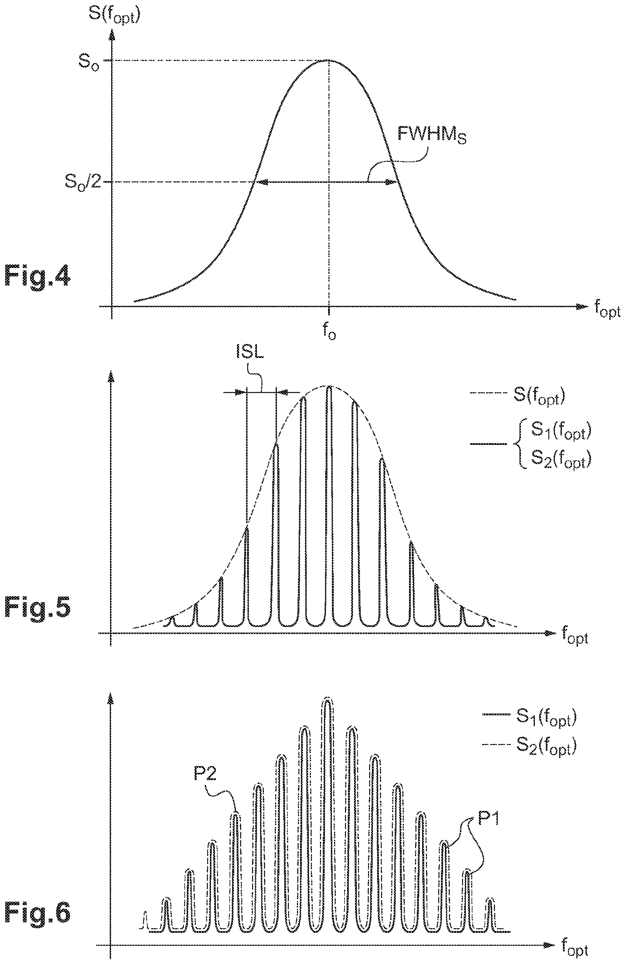

On a représenté sur la figure 5 les spectres lumineux des première et deuxième ondes lumineuses après transmission au travers du résonateur en anneau 1143. Ces spectres lumineux correspondent au produit du spectre $S(f_{opt})$ de la source lumineuse 103 de la figure 4 par la courbe de transmission $T_L(f)$ de la figure 2.

De manière classique, on parle de spectre « *cannelé* » pour le spectre lumineux de la figure 5.

On va détailler ci-après le comportement du dispositif de mesure interférométrique 100 lorsque celui-ci est au repos et en mouvement.

On entendra ici que le dispositif de mesure interférométrique 100 représenté sur la figure 3 est au repos lorsque la composante $\Omega_R$ de la vitesse de rotation est nulle, indiquant que l'interféromètre de SAGNAC 110 ne subit aucun effet non réciproque dû à sa rotation.

Par opposition, on entendra que le dispositif de mesure interférométrique 100 est en mouvement lorsque la composante $\Omega_R$ de la vitesse de rotation est non nulle (positive ou négative), indiquant que l'interféromètre de SAGNAC 110 subit un effet non réciproque dû à sa rotation.

Au repos, les deux spectres lumineux S1 ($f_{opt}$), S2($f_{opt}$) sont identiques et se superposent parfaitement: chaque pic de résonance P1 (voir figure 6) du spectre lumineux S1 ($f_{opt}$), correspondant à une fréquence optique particulière, qui est transmise intégralement par le résonateur en anneau 1143 de l'interféromètre de SAGNAC 110 (les ondes lumineuses ayant effectuées un, deux, trois, etc... passages dans le résonateur en anneau 1143 interférant en phase en sortie de l'interféromètre de SAGNAC 110), interfère de manière constructive avec un pic de résonance P2 (voir également figure 6) du spectre lumineux S2($f_{opt}$), de sorte qu'en sortie de l'interféromètre de SAGNAC 110, la puissance lumineuse de sortie $P_{OUT}$ est maximale et égale à $P_0$.

En mouvement, la première onde lumineuse 101 et la deuxième onde lumineuse 102, qui sont contra-propagatives dans l'interféromètre de SAGNAC 110 et en particulier dans le résonateur en anneau 1143, ressortent de celui-là en décalage de phase, la différence de phase totale $\Delta\phi_t$ entre les deux ondes lumineuses 101, 102 variant notamment en fonction de la différence de phase non réciproque $\Delta\phi_p$ introduite entre les deux ondes lumineuses 101, 102 par la variation du paramètre à mesurer, ici la composante $\Omega_R$ de la vitesse de rotation.

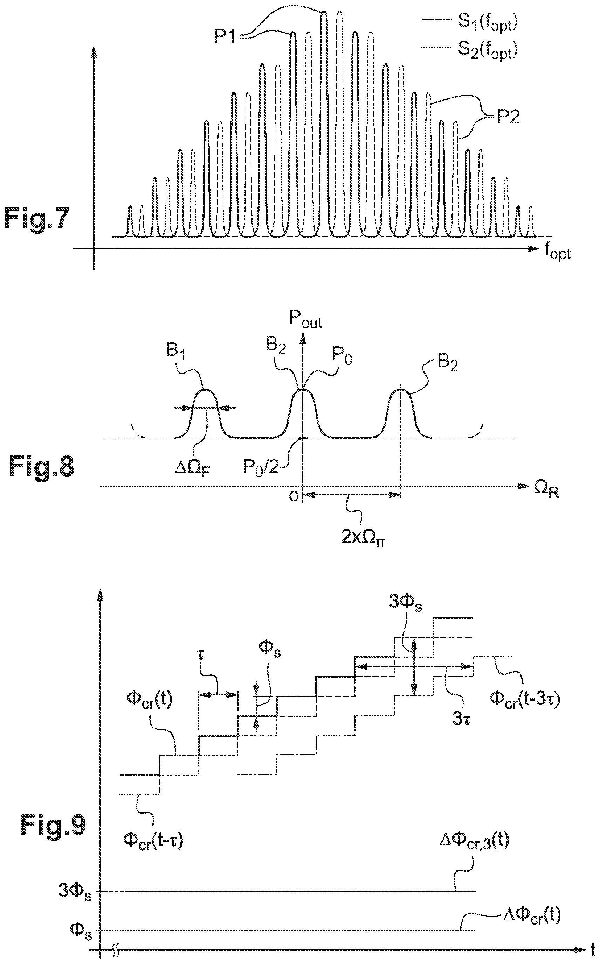

Ce cas est représenté sur la figure 7 où l'on a représenté sur une même courbe, en fonction de la fréquence optique $f_{opt}$, les spectres lumineux S1($f_{opt}$), S2($f_{opt}$) des première et deuxième ondes lumineuses 101, 102 à la sortie de l'interféromètre de SAGNAC 110 lorsqu'il est en mouvement.

En mouvement, les deux spectres lumineux S1($f_{opt}$), S2($f_{opt}$) sont quasiment identiques, car l''intervalle spectral libre ISL ne varie quasiment pas lors de la rotation.

Néanmoins, les deux spectres lumineux S1 ($f_{opt}$), S2($f_{opt}$) se décalent l'un par rapport à l'autre à cause de l'effet SAGNAC, le décalage étant fonction du paramètre physique $\Omega_R$ à mesurer.

Dans la situation représentée sur la figure 7, les pics de résonance P2 du spectre lumineux S2($f_{opt}$) de la deuxième onde lumineuse 102 en sortie de l'interféromètre de SAGNAC 110 sont situés à égale distance de deux pics de résonance P1 successifs du spectre lumineux S1 ($f_{opt}$) de la première onde lumineuse 101 en sortie de l'interféromètre de SAGNAC 110. Ainsi, les cannelures P1, P2 de la première onde lumineuse 101 et celles de la deuxième onde lumineuse 102, qui correspondent à des fréquences optiques différentes, ne peuvent pas interférer et il y a une perte de contraste, de sorte que la puissance lumineuse de sortie $P_{OUT}$ est égale à la moitié de la puissance maximale, soit $P_0/2$.

Entre la situation de la figure 6 (repos) et la situation de la figure 7 (mouvement), la puissance lumineuse de sortie $P_{OUT}$, fonction de la composante $\Omega_R$ de la vitesse de rotation, varie selon une courbe représentée sur la figure 8. La puissance lumineuse de sortie $P_{OUT}$ est périodique, de période $2*\Omega_\Pi = \lambda_0*c/(2*L_R)*D_R$, la largeur des bosses B1, B2, B3 (voir figure 8) étant égale à $\Delta\Omega_F = \Omega_\Pi/2F$.

De manière préférée, le déphasage de modulation $\phi_m$ présente une composante de déphasage de contre-réaction $\phi_{cr}$ destinée à ramener autour de la différence de marche nulle ($\Delta\phi_t = 0$) le point de fonctionnement de l'interféromètre de SAGNAC 110.

De manière avantageuse, la composante de déphasage de contre-réaction $\phi_{cr}$ est une modulation, en fonction du temps t, en marches d'escalier de durée $\tau$ et de hauteur $\phi_s$ telle que celle représentée sur la figure 9.

Une telle composante de déphasage de contre-réaction $\phi_{cr}$ introduit, entre deux ondes lumineuses se propageant de manière contra-propagative dans l'interféromètre de SAGNAC 110, une différence de phase de contre-réaction $\Delta\phi_{cr}(t) = \phi_{cr}(t) - \phi_{cr}(t-\tau)$ comme représentée sur la figure 9, la différence de phase de contre-réaction $\Delta\phi_{cr}(t)$ compensant la différence de phase non réciproque introduite entre ces deux ondes lumineuses par la rotation de l'interféromètre de SAGNAC 110. La hauteur $\phi_s$ des marches est ajustée en fonction du temps afin de compenser à chaque instant cette différence de phase non réciproque.

Pour deux ondes lumineuses se propageant de manière contra-propagative dans un interféromètre de SAGNAC, entre son port d'entrée et son port de sortie, la durée $\tau$ des marches d'escalier est liée au temps de propagation mis par ces ondes lumineuses pour effectuer un trajet dans cet interféromètre de SAGNAC.

De manière générale, aux deux ondes lumineuses transmises 101-1, 102-1 ayant parcouru en sens opposés l'interféromètre de SAGNAC 110 après un seul passage dans le résonateur en anneau 1143, on associe un temps de propagation $\tau_{g,1}$, appelé par la suite temps de propagation du premier passage, qui est égal à $n_{opt}*L_1/C$.

Par itération, on comprend que le temps de propagation $\tau_{g,2}$ du deuxième passage est égale à $n_{opt}*L_2/c$, que le temps de propagation $\tau_{g,3}$ du troisième passage est égale à $n_{opt}*L_3/c$, *etc...*

Ainsi, dans le cas général, le temps de propagation $\tau_{g,k}$ du k-ième passage est égal à $n_{op}*L_k/c$.

Dans ce premier mode de réalisation, la longueur totale $L_k$ parcourue après le k-ième passage étant telle que $L_k = k*L = k*L_1$ (voir *supra*), le temps de propagation $\tau_{g,k}$ du k-ième passage vérifie la relation suivante ; $\tau_{g,k} = k*\tau_{g,1}$.

De manière préférée, on ajuste la durée $\tau$ des marches d'escalier pour qu'elle soit égale au temps de propagation $\tau_{g,1}$ du premier passage, soit $\tau = n_{opt}*L_1/c$.

Or, dans ce premier mode de réalisation, on a vu que la longueur totale $L_1$ parcourue après un passage dans le résonateur en anneau 1143 était approximativement égale à la longueur L de la première bobine 1144 de fibre optique, c'est-à-dire $L_1 \approx L$.

Donc, le temps de propagation $\tau_{g,1}$ du premier passage est ici tel que $\tau_{g,1} \approx n_{opt}*L/c$.

On notera $\tau_g(L) = n_{opt}*L/c$, ce temps de propagation caractéristique qui est fonction de la longueur L de la première bobine 1144.

Ainsi, dans ce premier mode de réalisation, la composante de déphasage de contre-réaction $\phi_{cr}$ est une modulation en marches d'escalier de durée $\tau_g(L)$, fonction de la longueur L de la première bobine 1144 de fibre optique.

Lorsque l'interféromètre de SAGNAC 110 est en mouvement de rotation, les ondes lumineuses transmises 101-1, 102-1 ayant effectué un trajet en sens opposés dans l'interféromètre de SAGNAC 110 après un passage dans le résonateur en anneau 1143 sont déphasées de sorte que, par effet SAGNAC, une différence de phase non réciproque $\Delta\phi_{p,1}$ est introduite entre ces deux ondes lumineuses transmises 101-1, 102-1.

Dans le cas général, la différence de phase non réciproque $\Delta\phi_{p,k}$ introduite entre les deux ondes lumineuses transmises 101-k, 102-k après le k-ième passage, c'est-à-dire après avoir circulé k fois dans le résonateur en anneau 1143, est k fois plus grande, soit

$$\Delta\phi_{p,k} = k*\Delta\phi_{p,1}.$$

De manière préférée également, la hauteur $\phi_s$ des marches d'escalier (voir figure 9) est égale à la différence de phase non réciproque $\Delta\phi_{p,1}$ du premier passage, soit $\phi_s = \Delta\phi_{p,1}$.

De cette façon, les ondes lumineuses transmises 101-1, 102-1 ayant effectué un trajet en sens opposés dans l'interféromètre de SAGNAC 110 après un passage dans le résonateur en anneau 1143, sont modulées par la modulation de contre-réaction $\phi_{cr}$ de sorte que la marche $\phi_s$ compense la rotation de l'interféromètre de SAGNAC 110 pour ces deux ondes lumineuses transmises 101-1, 102-1.

Par ailleurs, comme représenté sur la figure 9 dans le cas k = 3, les ondes lumineuses transmises 101-k, 102-k ayant effectué un trajet dans l'interféromètre de SAGNAC 110 après k passages dans le résonateur en anneau 1143, sont également efficacement modulées par cette modulation de contre-réaction $\phi_{cr}$,

En effet, le temps de propagation $\tau_{g,k}$ après k passages étant k fois plus grand que le temps de propagation $\tau_{g,1}$ après un passage, les marches d'escalier sont décalées d'une durée égale à $k*\tau_g(L)$ (voir la modulation $\phi_{cr}(t-k*\tau) = \phi_{cr}(t-3*\tau_g(L))$ sur la figure 9 avec k = 3). La modulation de différence de phase de contre-réaction $\Delta\phi_{cr,3}(t)$ introduite alors entre les deux ondes lumineuses transmises 101-3, 102-3 ayant circulé trois fois dans le résonateur en anneau 1143 est alors telle que : $\Delta\phi_{cr,3}(t) = \phi_{cr}(t) - \phi_{cr}(t-3*\tau_g(L)) = 3*\phi_s = 3*\Delta\phi_{p,1} = \Delta\phi_{p,3}$ . Elle compense donc efficacement la différence de phase non réciproque $\Delta\phi_{p,3}$ engendrée entre les deux ondes lumineuses transmises 101-3, 102-3 par la rotation de l'interféromètre de SAGNAC 110.

La modulation de contre-réaction $\phi_{cr}$ ainsi choisie, avec des marches d'escalier de durée $\tau = \tau_{g,1}$ et de hauteur $\phi_s = \Delta\phi_{p,1}$, module toutes les ondes lumineuses transmises 101-1, 101-2, 101-3, 101-k, 102-1, 102-2, 102-3, 102-k après un trajet dans l'interféromètre de SAGNAC 110. Les ondes lumineuses 101, 102 résultantes sont donc efficacement modulées et le point de fonctionnement de l'interféromètre de SAGNAC 110 est correctement ramené vers le zéro.

Dans un mode de réalisation particulièrement avantageux, le déphasage de modulation $\phi_m$ présente également une composante de déphasage de mise au biais $\phi_b$, périodique de fréquence de modulation de mise au biais $f_b$, destinée à déplacer le point de fonctionnement de l'interféromètre de SAGNAC 110 du maximum de la courbe de réponse en puissance optique (figure 8).

De manière générale, pour deux ondes lumineuses se propageant de manière contra-propagative dans un interféromètre de SAGNAC, entre son port d'entrée et son port de sortie, on peut définir une fréquence propre de l'interféromètre de SAGNAC qui est liée au temps de propagation mis par ces ondes lumineuses pour effectuer un trajet dans cet interféromètre de SAGNAC.

En d'autres termes, cette fréquence propre est liée à la longueur totale parcourue par ces deux ondes lumineuses contra-propagatives lors d'un trajet dans l'interféromètre de SAGNAC.

Par analogie, aux deux ondes lumineuses transmises 101-1, 102-1 ayant parcouru en sens opposé l'interféromètre de SAGNAC 110 après un seul passage dans le résonateur en anneau 1143, on associe une fréquence propre $f_{p,1}$, appelée fréquence propre du premier passage, égale à $c/(n_{opt}*L_1)$.

Par itération, on comprend que la fréquence propre du deuxième passage $f_{p,2}$ est égale à $c/(n_{opt}*L_2)$, que la fréquence propre du troisième passage $f_{p,3}$ est égale à $c/(n_{opt}*L_3)$, *etc...*

Ainsi, dans le cas général, la fréquence propre du k-ième passage $f_{p,k}$ est égale à $c/(n_{opt}*L_k)$ pour ce premier mode de réalisation.

Avantageusement, la fréquence de modulation de mise au biais $f_b$ est égale à la fréquence propre du premier passage $f_{p,1}$.

Les ondes lumineuses transmises 101-1, 102-1 sont donc efficacement modulées à la fréquence propre du premier passage $f_{p,1}$.

Or, dans ce premier mode de réalisation, on a vu que la longueur totale $L_1$ parcourue après un passage dans le résonateur en anneau 1143 était approximativement égale à la longueur L de la première bobine 1144 de fibre optique, soit $L1 \approx L$.

Donc, la fréquence propre du premier passage $f_{p,1}$ est telle que $f_{p,1} \approx c/(n_{opt}*L)$.

On notera $f_p(L) = c/(n_{opt}*L)$ cette fréquence propre caractéristique qui est fonction de la longueur L de la première bobine 1144.

Ainsi, dans ce premier mode de réalisation, la composante de déphasage de mise au biais $\phi_b$ est périodique à la fréquence propre $f_p(L)$, fonction de la longueur L de la première bobine 1144 de fibre optique.

De plus, comme dans ce premier mode de réalisation, on a montré que la longueur totale $L_k$ parcourue après le k-ième passage était telle que $L_k = k*L = k*L_1$, la fréquence propre $f_{p,k}$ du k-ième passage vérifie la relation suivante ; $k*f_{p,k} = f_{b,1} = f_p(L)$.

Or, la composante de déphasage de mise au biais $\phi_b$ génère, entre les deux ondes lumineuses transmises 101-k, 102-k après le k-ième passage, une composante de différence de phase de mise au biais $\Delta\phi_{b,k}(t)$,

Cette composante de différence de phase de mise au biais $\Delta\phi_{b,k}(t)$, qui est telle que $\Delta\phi_{b,k}(t) = \phi_b(t) - \phi_b(t-1/f_{b,k}) = \phi_b(t) - \phi_b(t-k*1/f_b(L))$, est ;

- maximale si la fréquence de modulation de mise au biais $f_b$ est égale à la fréquence propre $f_{p,k}$ du k-ième passage ($f_b = f_{p,k}$) ou à un de ses multiples impairs ($f_b = 3*f_{p,k}$, $5*f_{p,k}$, etc...), et
- nulle si la fréquence de modulation de mise au biais $f_b$ est égale à un multiple pair de la fréquence propre $f_{p,k}$ ($f_b = 2*f_{p,k}$, $4*f_{p,k}$, etc...).

Les ondes lumineuses transmises ayant effectuées un nombre impair de passages (cas k = 1, 3, 5, etc...) sont donc efficacement modulées par la chaîne de modulation, alors que les ondes lumineuses transmises ayant effectuées un nombre pair de passages (cas k = 2, 4, 6, etc...) ne sont pas modulées.

Par conséquent, les première et deuxième ondes lumineuses 101, 102 étant la superposition des différentes ondes lumineuses transmises 101-1, 101-2, 101-3, etc..., 102-1, 102-2, 102-3, etc..., seule la moitié du signal électrique délivré par le détecteur 104 est mise au biais.

Afin de corriger ce défaut et récupérer l'intégralité du signal électrique utile délivré par le détecteur en modulant efficacement toutes les ondes lumineuses circulant dans l'interféromètre de SAGNAC après un ou plusieurs passages, il est avantageux d'utiliser une deuxième bobine de fibre optique dans le résonateur en anneau de l'interféromètre de SAGNAC.

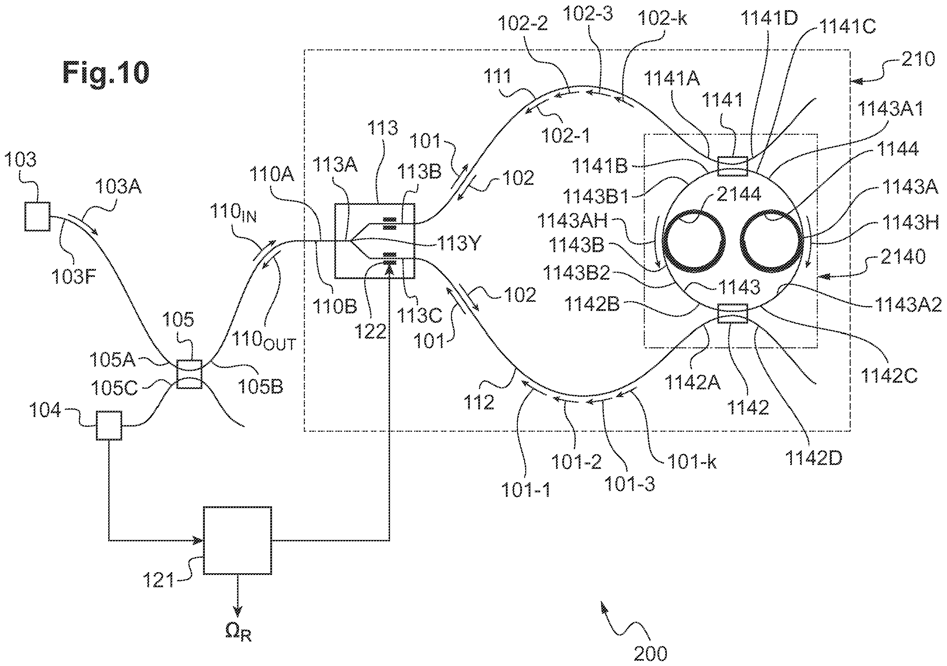

On a ainsi représenté sur la figure 10 un deuxième mode de réalisation du dispositif de mesure interférométrique 200 dans lequel le résonateur en anneau 1143 de l'interféromètre de SAGNAC 210 comprend une deuxième bobine 2144 de fibre optique.

De manière avantageuse, la fibre optique utilisée pour la deuxième bobine 2144 est identique à celle utilisée pour la première bobine 1144.

De manière préférée, la deuxième bobine 2144 est de même longueur que la première bobine 1144, c'est-à-dire de longueur L.

De plus, la deuxième bobine 2144 de fibre optique présente de préférence la même surface et le même bobinage symétrique que la première bobine 1144 de fibre optique.

Comme représenté sur la figure 10, la première bobine 1144 et la deuxième bobine 2144 de fibre optique sont disposées de chaque côté du résonateur en anneau 1143 de l'interféromètre de SAGNAC 210, la première bobine 1144 sur la première moitié et la deuxième bobine 2144 sur la deuxième moitié.

Ainsi disposées, la première bobine 1144 et la deuxième bobine 2144 sont séparées de chaque côté par le premier coupleur 1141 et le deuxième coupleur 1142.

Comme pour le premier mode de réalisation, en pratique, la longueur L de la deuxième bobine 2144 est très supérieure, par exemple cent fois plus grande, que les portions restantes 1143B1, 1143B2 de fibre optique (voir figure 10) du résonateur en anneau 1143 qui sont situées sur la deuxième portion 1143B du résonateur en anneau 1143 respectivement, entre le premier coupleur 1141 et la deuxième bobine 2144, et entre le deuxième coupleur 1142 et la deuxième bobine 2144.

Ainsi, de manière générale, la longueur $L_B$ de la deuxième portion 1143B du résonateur en anneau 1143 est, dans ce deuxième mode de réalisation, très peu différente (légèrement supérieure) à la longueur L de la deuxième bobine 2144 de fibre optique située sur cette deuxième portion 1143B, soit $L_B \approx L$.

Par conséquent, la longueur totale $L_R = L_A + L_B$ du résonateur peut être assimilée, dans ce deuxième mode de réalisation, à deux fois la longueur L de la première bobine 1144 de fibre optique, c'est-à-dire que $L_R = L_A + L_B \approx 2{*}L$.

De plus, on considérera également que dans le deuxième mode de réalisation, la longueur L de la première bobine 1144 de fibre optique est très supérieure à la longueur totale L' des premier et deuxième bras 111, 112 de l'interféromètre de SAGNAC 110 (L >> L'), de sorte que, en première approximation, la longueur totale $L_1$ parcourue au premier passage peut être assimilée, dans ce deuxième mode de réalisation, à la longueur L de la première bobine 1144 de fibre optique. En effet, comme vu précédemment, on a les relations suivantes :

$$L_1 = L_A + L' \approx L + L' \text{ car } L_A \approx L, \text{ d'où } L_1 \approx L \text{ car } L >> L'.$$

Par itération, la longueur totale $L_k$ parcourue après le k-ième passage, dans ce deuxième mode de réalisation, vérifie les relations suivantes :

$$L_k = L_A + (k-1){*}L_R + L' \approx L + (k-1){*}(2{*}L) \approx (2k-1){*}L \approx (2k-1){*}L_1$$

Ainsi, dans ce deuxième mode de réalisation, la fréquence propre $f_{p,k}$ du k-ième passage vérifie la relation suivante : $(2k-1){*}f_{p,k} = f_{b,1} = f_p(L)$.

Ainsi, en utilisant une composante de modulation de mise au biais $\phi_b$ périodique à une fréquence de modulation de mise au biais $f_b$ égale à la fréquence propre $f_p(L)$, fonction de la longueur L de la première bobine 1144 (et aussi de la deuxième bobine 2144) du résonateur en anneau 1143, les ondes lumineuses 101, 102 ayant effectuées k passages sont modulées par la chaîne de modulation 120 à une fréquence de modulation de mise au biais $f_b$ qui est égale à un multiple impair de la fréquence propre $f_{p,k}$ du k-ième passage.

Par conséquent, toutes les ondes lumineuses transmises 101-1, 101-2, 101-3, ..., 101-k ainsi que 102-1, 102-2, 102-3, ..., 102-k sont correctement modulées et l'ensemble du signal électrique délivré par le détecteur 104 est mis au biais.

La mesure du paramètre physique $\Omega_R$ à mesurer est meilleure et le dispositif de mesure interférométrique 200 dans ce deuxième mode de réalisation est donc plus performant.

Néanmoins, il subsiste un signal parasite résiduel dû au fait que, en toute rigueur, la fréquence propre $f_{p,k}$ du k-ième passage ne vérifie pas exactement la relation $(2k-1)*f_{p,k} = f_p(L)$ (voir ci-dessus).

En effet, les longueurs des bras 111, 112 de l'interféromètre de SAGNAC 210 doivent être prises en compte dans la détermination de la longueur totale $L_k$ parcourue après le k-ième passage.

Aussi, pour augmenter encore les performances du dispositif de mesure interférométrique, il est possible d'ajuster la longueur totale $L_R$ du résonateur en anneau afin de tenir compte de la longueur totale L' des bras de l'interféromètre de SAGNAC.

On a ainsi représenté sur la figure 11 un troisième mode de réalisation du dispositif de mesure interférométrique 300 dans lequel le résonateur en anneau 1143 comprend, en plus des première et deuxième bobines 1144, 2144 de longueur L, deux portions additionnelles 3151, 3152 de fibre optique, de préférence identique à la fibre optique utilisée pour lesdites bobines 1144, 2144.

Ces portions additionnelles 3151, 3152 ont pour fonction d'ajuster le rapport des temps de propagation $\tau_g$ entre les différentes ondes lumineuses 101, 102 ayant effectué un trajet en sens opposé dans l'interféromètre de SAGNAC 310 après un ou plusieurs passages dans le résonateur en anneau 1143.

Comme représenté sur la figure 11, les deux portions additionnelles 3151, 3152 sont disposées de part et d'autre de la deuxième bobine 2144, entre cette deuxième bobine 2144 de fibre optique et l'un des deux coupleurs 1141, 1142 du résonateur en anneau 1143.

De manière préférée, dans ce troisième mode de réalisation, la somme des longueurs des portions additionnelles 3151, 3152 est égale à $2*L'$.

Faisant les mêmes approximations sur les portions restantes 1143A1, 1143A2, 1143B1, 1143B2 que pour les premier et deuxième mode de réalisation (voir figures 3 et 10), et en tenant compte, dans ce troisième mode de réalisation, de la longueur totale L' des bras de l'interféromètre de SAGNAC 310 et de la somme des longueurs des portions additionnelles 3151, 3152 égale à $2*L'$, on montre les relations suivantes pour la longueur totale $L_R$ du résonateur en anneau 1143 et la longueur totale $L_k$ parcourue au k-ième passage :

$$L_R = L_A + L_B \approx 2*(L+L'), \text{ car } L_A \approx L \text{ et } L_B \approx L+2*L'$$

$$L_k = L_A + (k-1)*L_R + L' \approx L + 2*(k-1)*(L+L') + L' = (2k-1)*(L+L')$$

En particulier, la longueur totale $L_1$ parcourue au premier passage est égale à $L+L'$, de sorte que l'on retrouve la même relation que pour le deuxième mode de réalisation, à savoir : $Lk = (2k-1)*L_1$.

Par conséquent, en utilisant une composante de modulation de mise au biais $\phi_b$ périodique à une fréquence de modulation de mise au biais $f_b$ égale à la fréquence propre $f_p(L+L') = f_{p,1}$, fonction de la longueur $L+L'$ égale à la longueur totale $L_1$ du premier passage dans le résonateur en anneau 1143, les ondes lumineuses transmises 101-k, 102-k ayant effectuées k passages sont modulées par la chaîne de modulation à une fréquence de modulation de mise au biais $f_b$ qui est égale à un multiple impair de la fréquence propre $f_{p,k}$ du k-ième passage.

Par conséquent, toutes les ondes lumineuses transmises 101, 102 sont correctement modulées et l'ensemble du signal électrique délivré par le détecteur 104 est mis au biais.

La mesure du paramètre physique $\Omega_R$ à mesurer est meilleure et le dispositif de mesure interférométrique 300 dans ce troisième mode de réalisation est encore plus performant.

On notera enfin que la modulation de contre-réaction $\phi_{cr}$ (voir figure 9) utilisée dans le premier mode de réalisation, avec une durée $\tau$ des marches d'escalier égale au temps de propagation $\tau_{g,1}$ du premier passage et avec une hauteur de marche $\phi_s$ égale à la différence de phase non réciproque $\Delta\phi_{p,1}$ du premier passage, peut également être utilisée dans les deuxième et troisième mode de réalisation, avec des résultats similaires.

## Revendications

1. Dispositif de mesure interférométrique (100 ; 200 ; 300) à fibre optique destiné à mesurer un paramètre physique ($\Omega_R$) et comportant :

    - une source lumineuse (103) à spectre large émettant un signal lumineux source (103A),
    - un interféromètre de SAGNAC (110 ; 210 ; 310) à fibre optique, dans lequel se propagent une première onde lumineuse (101) et une deuxième onde lumineuse (102) contra-propagatives, ledit interféromètre de SAGNAC (110 ; 210 ; 310) comprenant :

- un port d'entrée (110A) recevant, dans un sens aller, un signal lumineux d'entrée ($110_{IN}$),
- un séparateur (113) connecté, d'une part, audit port d'entrée (110A) et, d'autre part, à un premier bras (111) et à un deuxième bras (112) dudit interféromètre de SAGNAC (110 ; 210 ; 310),
- des moyens de mesure (1140 ; 2140 ; 3140) sensibles audit paramètre physique ($\Omega_R$) à mesurer, ledit paramètre physique ($\Omega_R$) engendrant une différence de phase non réciproque $\Delta\phi_p$, fonction dudit paramètre physique ($\Omega_R$), entre lesdites deux ondes lumineuses (101, 102) contra-propagatives, et
- un port de sortie (110B), commun avec ledit port d'entrée (110A), transmettant, dans un sens retour opposé au sens aller, un signal lumineux de sortie ($110_{OUT}$) présentant une puissance lumineuse de sortie $P_{OUT}$ fonction de la différence de phase totale $\Delta\phi_t$, entre lesdites deux ondes lumineuses (101, 102) contra-propagatives,

- un détecteur (104) de rayonnement optique, recevant ladite puissance lumineuse de sortie $P_{OUT}$ sortant dudit interféromètre de SAGNAC (110 ; 210 ; 310) et délivrant un signal électrique représentatif de la puissance lumineuse de sortie $P_{OUT}$ et du paramètre physique ($\Omega_R$) à mesurer, et
- un coupleur de source (105) qui couple, dans ledit sens aller, ladite source lumineuse (103) audit port d'entrée (110A) de l'interféromètre de SAGNAC (110 ; 210 ; 310), et dans ledit sens retour, ledit port de sortie (110B) de l'interféromètre de SAGNAC (110 ; 210 ; 310) audit détecteur (104),

ledit dispositif de mesure interférométrique (100 ; 200 ; 300) étant **caractérisé en ce que** lesdits moyens de mesure (1140 ; 2140 ; 3140) de l'interféromètre de SAGNAC (110 ; 210 ; 310) comportent un résonateur en anneau (1143) à fibre optique en mode de transmission, ledit résonateur en anneau (1143) comprenant un premier coupleur (1141), respectivement un deuxième coupleur (1142), qui couple le premier bras (111), respectivement le deuxième bras (112), dudit interféromètre de SAGNAC (110 ; 210 ; 310) audit résonateur en anneau (1143), de sorte que lesdites première et deuxième ondes lumineuses (101, 102) dans ledit résonateur en anneau (1143) circulent dans des sens de circulation opposés (1143H, 1143AH).

2. Dispositif de mesure interférométrique (100 ; 200 ; 300) selon la revendication 1, dans lequel ledit résonateur en anneau (1143) comprend au moins une première bobine (1144) de fibre optique de longueur L située sur une première portion (1143A) du résonateur en anneau (1143), entre ledit premier coupleur (1141) et ledit deuxième coupleur (1142).

3. Dispositif de mesure interférométrique (200 ; 300) selon la revendication 2, dans lequel ledit résonateur en anneau (1143) comprend une deuxième bobine (2144) de fibre optique, de même longueur que la première bobine (1144) de fibre optique, située sur une deuxième portion (1143B) dudit résonateur en anneau (1143), lesdites première et deuxième bobines (1144, 2144) de fibre optique étant séparées par ledit premier coupleur (1141) et ledit deuxième coupleur (1142).

4. Dispositif de mesure interférométrique (300) selon la revendication 3, dans lequel ledit résonateur en anneau (1143) comprend deux portions additionnelles (3151, 3152) de fibre optique dont la somme des longueurs est égale à 2L', L' étant la somme des longueurs desdits premier et deuxième bras (111, 112) de l'interféromètre de SAGNAC (110 ; 210 ; 310) déterminées respectivement entre ledit séparateur (113) et lesdits premier et deuxième coupleurs (1141, 1142), lesdites deux portions additionnelles (3151, 3152) étant disposées de part et d'autre de ladite deuxième bobine (2144) de fibre optique, entre ladite deuxième bobine (2144) et l'un desdits premier et deuxième coupleurs (1141, 1142).

5. Dispositif de mesure interférométrique (100 ; 200 ; 300) selon l'une des revendications 1 à 4, comportant une chaîne de modulation adaptée à moduler ladite puissance lumineuse de sortie $P_{OUT}$ sortant dudit interféromètre de SAGNAC (110 ; 210 ; 310), ladite chaîne de modulation comprenant un modulateur de phase (122) disposé au niveau du séparateur (113), sur le premier et le deuxième bras (111, 112) de l'interféromètre de SAGNAC (110 ; 210 ; 310), pour introduire, entre ledit sens aller et ledit sens retour, un déphasage de modulation $\phi_m$ sur chacune desdites première et deuxième ondes lumineuses (101, 102) se propageant dans lesdits premier et deuxième bras (111, 112).

6. Dispositif de mesure interférométrique (100 ; 200) selon la revendication 5 prise en combinaison avec l'une des revendications 2 à 4, dans lequel ledit déphasage de modulation $\phi_m$ présente une composante de déphasage de mise au biais $\phi_b$ périodique à une fréquence propre $f_p(L)$, fonction de la longueur L de ladite première bobine (1144) de fibre optique.

7. Dispositif de mesure interférométrique (300) selon les revendications 4 et 5, dans lequel ledit déphasage de modulation $\phi_m$ présente une composante de déphasage de mise au biais $\phi_b$ périodique à une fréquence propre $f_p(L+L')$, fonction de la longueur L+L'.

8. Dispositif de mesure interférométrique (100) selon l'une des revendications 5 à 7, dans lequel ledit déphasage de modulation $\phi_m$ présente une composante de déphasage de contre-réaction $\phi_{cr}$ qui est une modulation en marches d'escalier de durée $\tau_g(L)$, fonction de la longueur L de ladite première bobine (1144) de fibre optique.

9. Gyromètre comportant un dispositif de mesure interférométrique (100 ; 200 ; 300) selon l'une des revendications 1 à 8, le paramètre physique ($\Omega_R$) à mesurer étant une composante de la vitesse de rotation dudit gyromètre autour d'un axe de rotation, la variation de la différence de phase non réciproque $\Delta\phi_p$ étant produite par le paramètre physique ($\Omega_R$) à mesurer par effet SAGNAC.

10. Centrale d'attitude ou de navigation inertielle comportant au moins un gyromètre selon la revendication 9.

11. Capteur de courant électrique ou de champ magnétique comportant un dispositif de mesure interférométrique selon l'une des revendications 1 à 8, la variation de la différence de phase non réciproque $\Delta\phi_p$ étant produite par le paramètre physique à mesurer par effet FARADAY.

## Patentansprüche

1. Interferometrische Glasfaser-Meßvorrichtung (100; 200; 300), die dazu bestimmt ist, einen physikalischen Parameter ($\Omega_R$) zu messen, mit:

   - einer Lichtquelle (103) breiten Spektrums, die ein Quellenlichtsignal (103A) aussendet,
   - einem Glasfaser-SAGNAC-Interferometer (110; 210; 310), in dem sich eine erste Lichtwelle (101) und eine zweite Lichtwelle (102) in entgegengesetzten Richtungen ausbreiten, wobei das SAGNAC-Interferometer (110; 210; 310)

     - einen Eingang (110A), der in einer Hin-Richtung ein Eingangslichtsignal ($110_{IN}$) empfängt,
     - ein Trennelement (113), das einerseits mit dem Eingang (110A) und andererseits mit einem ersten Arm (111) und einem zweiten Arm (112) des SAGNAC-Interferometers (110; 210; 310) verbunden ist,
     - Meßmittel (1140; 2140; 3140), die auf den physischen Parameter ($\Omega_R$) ansprechen, wobei der physische Parameter ($\Omega_R$) einen nicht gegenseitigen, vom physischen Parameter ($\Omega_R$) abhängigen Phasenunterschied $\Delta\Phi_p$ zwischen den beiden sich in entgegengesetzten Richtungen ausbreitenden Lichtwellen (101, 102) erzeugt, und
     - einen mit dem Eingang (110A) gemeinsamen Ausgang (110B), der in einer zur Hin-Richtung entgegengesetzten Rück-Richtung ein Ausgangslichtsignal ($110_{OUT}$) überträgt, das eine vom totalen Phasenunterschied $\Delta\Phi_t$ zwischen den beiden sich in entgegengesetzten Richtungen ausbreitenden Lichtwellen (101, 102) abhängige Ausgangslichtleistung $P_{OUT}$ aufweist, aufweist,

     - einem Detektor (104) optischer Strahlung, der die aus dem SAGNAC-Interferometer (110; 210; 310) austretende Ausgangslichtleistung $P_{OUT}$ empfängt und ein die Ausgangslichtleistung $P_{OUT}$ und den zu messenden physikalischen Parameter ($\Omega_R$) darstellendes elektrisches Signal abgibt, und
     - einem Quellenkoppler (105), der in der Hin-Richtung die Lichtquelle (103) an den Eingang (110A) des SAGNAC-Interferometers (110; 210; 310) und in der Rück-Richtung den Ausgang (110B) des SAGNAC-Interferometers (110; 210; 310) an den Detektor (104) koppelt,

   wobei die interferometrische Meßvorrichtung (100; 200; 300) **dadurch gekennzeichnet ist, daß** die Meßmittel (1140; 2140; 3140) des SAGNAC-Interferometers (110; 210; 310) einen Glasfaser-Ringresonator (1143) im Übertragungsmodus aufweisen, wobei der Ringresonator (1143) einen ersten Koppler (1141) und einen zweiten Koppler (1142) aufweist, die den ersten Arm (111) bzw. den zweiten Arm (112) des SAGNAC-Interferometers (110; 210; 310) derart an den Ringresonator (1143) koppeln, daß sich die erste und die zweite Lichtwelle (101, 102) im Ringresonator (1143) in entgegengesetzten Richtungen (1143H, 1143AH) ausbreiten.

2. Interferometrische Meßvorrichtung (100; 200; 300) gemäß Anspruch 1, bei der der Ringresonator (1143) wenigstens eine erste Glasfaserspule (1144) der Länge L aufweist, die sich in einem ersten Abschnitt (1143A) des Ringresonators (1143) zwischen dem ersten Koppler (1141) und dem zweiten Koppler (1142) befindet.

3. Interferometrische Meßvorrichtung (200; 300) gemäß Anspruch 2, bei der der Ringresonator (1143) eine zweite Glasfaserspule (2144) aufweist, die die gleiche Länge wie die erste Glasfaserspule (1144) hat und sich in einem zweiten Abschnitt (1143B) des Ringresonators (1143) befindet.

4. Interferometrische Meßvorrichtung (300) gemäß Anspruch 3, bei der der Ringresonator (1143) zwei zusätzliche Glasfaserabschnitte (3151, 3152) aufweist, deren Längen zusammen 2L' betragen, wobei L' die Summe der Längen des ersten und des zweiten Arms (111, 112) des SAGNAC-Interferometers (110; 210; 310) ist, die jeweils zwischen dem Trennelement (113) und dem ersten bzw. dem zweiten Koppler (1141, 1142) bestimmt sind, wobei die beiden zusätzlichen Abschnitte (3151, 3152) beiderseits der zweiten Glasfaserspule (2144) zwischen der zweiten Spule (2144) und dem ersten bzw. dem zweiten Koppler (1141, 1142) angeordnet sind.

5. Interferometrische Meßvorrichtung (100; 200; 300) gemäß einem der Ansprüche 1 bis 4, mit einer Modulationskette, die dazu ausgelegt ist, die aus dem SAGNAC-Interferometer (110; 210; 310) austretende Ausgangslichtleistung $P_{OUT}$ zu modulieren, wobei die Modulationskette einen im Bereich des Trennelements (113) auf dem ersten und dem zweiten Arm (111, 112) des SAGNAC-Interferometers (110; 210; 310) angeordneten Phasenmodulator (122) aufweist, um zwischen der Hin-Richtung und der Rück-Richtung auf der ersten und auf der zweiten Lichtwelle (101, 102), die sich im ersten bzw. im zweiten Arm (111, 112) ausbreiten, eine Modulationsphasenverschiebung $\Phi_m$ einzubringen.

6. Interferometrische Meßvorrichtung (100; 200) gemäß Anspruch 5 in Verbindung mit einem der Ansprüche 2 bis 4, bei der die Modulationsphasenverschiebung $\Phi_m$, eine periodische Abweichphasenverschiebungskomponente $\Phi_b$ mit einer Eigenfrequenz $f_p(L)$, die von der Länge L der ersten Glasfaserspule (1144) abhängt, aufweist.

7. Interferometrische Meßvorrichtung (300) gemäß den Ansprüchen 4 und 5, bei der die Modulationsphasenverschiebung $\Phi_m$ eine periodische Abweichphasenverschiebungskomponente $\Phi_b$ mit einer Eigenfrequenz $f_p(L+L')$, die von der Länge L+L' abhängt, aufweist.

8. Interferometrische Meßvorrichtung (100) gemäß einem der Ansprüche 5 bis 7, bei der die Modulationsphasenverschiebung $\Phi_m$ eine Gegenreaktionsphasenverschiebungskomponente $\Phi_{cr}$ aufweist, die eine Stufenmodulation der Dauer $\tau_g(L)$ in Abhängigkeit von der Länge L der ersten Glasfaserspule (1144) ist.

9. Kreisel mit einer interferometrischen Meßvorrichtung (100) gemäß einem der Ansprüche 1 bis 8, bei dem der zu messende physikalische Parameter ($\Omega_R$) eine Komponente der Drehgeschwindigkeit des Kreisels um eine Drehachse ist, wobei die Änderung des nicht gegenseitigen Phasenunterschieds $\Delta\Phi_p$ durch den zu messenden physikalischen Parameter ($\Omega_R$) durch den SAGNAC-Effekt erzeugt wird.

10. Trägheitshaltungs- oder -navigationsenheit mit einem Kreisel gemäß Anspruch 9.

11. Sensor für elektrischen Strom oder für ein Magnetfeld mit einer interferometrischen Meßvorrichtung gemäß einem der Ansprüche 1 bis 8, bei dem die Änderung des nicht gegenseitigen Phasenunterschieds $\Delta\Phi_p$ durch den zu messenden physikalischen Parameter durch den FARADAY-Effekt erzeugt wird.

**Claims**

1. A fibre-optic interferometric measurement device (100; 200; 300) intended to measure a physical parameter ($\Omega_R$) and including:

  - a wide-spectrum light source (103) emitting a source light signal (103A),
  - a fibre-optic SAGNAC interferometer (110; 210; 310), in which propagate a first light wave (101) and a second light wave (102), which are counter-propagating, said SAGNAC interferometer (110; 210; 310) comprising:

    - an input port (101A) receiving, in a forward direction, an input light signal ($110_{IN}$),
    - a splitter (113) connected, on the one hand, to said input port (110A) and, on the other hand, to a first arm (111) and to a second arm (112) of said SAGNAC interferometer (110; 210; 310),
    - measurement means (1140; 2140; 3140) sensitive to said physical parameter ($\Omega_R$) to be measured, said

physical parameter ($\Omega_R$) generating a non-reciprocal phase difference $\Delta\phi_p$, which is function of said physical parameter ($\Omega_R$), between said two counter-propagating light waves (101, 102), and
- an output port (110B), common with said input port (110A), transmitting, in a return direction opposite to the forward direction, an output light signal ($110_{OUT}$) having an output light power $P_{OUT}$ that is function of the total phase difference $\Delta\phi_t$ between said two counter-propagating light waves (101, 102),

- an optical radiation detector (104), receiving said output light power $P_{OUT}$ exiting from said SAGNAC interferometer (110; 210; 310) and delivering an electric signal representative of the output light power $P_{OUT}$ and of the physical parameter ($\Omega_R$) to be measured, and
- a source coupler (105) that couples, in said forward direction, said light source (103) to said input port (110A) of the SAGNAC interferometer (110; 210; 310), and in said return direction, to said output port (110B) of the SAGNAC interferometer (110; 210; 310) to said detector (104),

said interferometric measurement device (100; 200; 300) being **characterized in that** said measurement means (1140; 2140; 3140) of the SAGNAC interferometer (110; 210; 310) include a transmission-mode fibre-optic ring resonator (1143), said ring resonator (1143) comprising a first coupler (1141), respectively a second coupler (1142), which couples the first arm (111), respectively the second arm (112), of said SAGNAC interferometer (110; 210; 310) to said ring resonator (1143), so that said first and second light waves (101, 102) in said ring resonator (1143) circulate in opposite directions of circulation (1143H, 1143AH).

2. The interferometric measurement device (100; 200; 300) according to claim 1, wherein said ring resonator (1143) comprises at least one first fibre-optic coil (1144) of length L located in a first portion (1143A) of the ring resonator (1143), between said first coupler (1141) and said second coupler (1142).

3. The interferometric measurement device (200; 300) according to claim 2, wherein said ring resonator (1143) comprises a second fibre-optic coil (2144), of same length as the first fibre-optic coil (1144), located in a second portion (1143B) of said ring resonator (1143), said first and second fibre-optic coils (1144, 2144) being separated by said first coupler (1141) and said second coupler (1142).

4. The interferometric measurement device (300) according to claim 3, wherein said ring resonator (1143) comprises two additional portions (3151, 5152) of optical fibre, whose length sum is equal to 2L', L' being the sum of the lengths of said first and second arms (111, 112) of the SAGNAC interferometer (110; 210; 310) determined between said splitter (113) and said first and second couplers (1141, 1142), respectively, said two additional portions (3151, 3152) being arranged on either side of said second fibre-optic coil (2144), between said second coil (2144) and one of said first and second couplers (1141, 1142).

5. The interferometric measurement device (100; 200; 300) according to any one of claims 1 to 4, including a modulation chain adapted to modulate said output light power $P_{OUT}$ exiting from said SAGNAC interferometer (110; 210; 310), said modulation chain comprising a phase modulator (122) arranged at the splitter (113), in the first and the second arms (111, 112) of the SAGNAC interferometer (110; 210; 310), to introduce, between said forward direction and said return direction, a modulation phase-shift $\phi_m$ on each of said first and second light waves (101, 102) propagating in said first and second arms (111, 112).

6. The interferometric measurement device (100; 200) according to claim 5, taken in combination with one of claims 2 to 4, wherein said modulation phase-shift $\phi_m$ has a biasing phase-shift component $\phi_b$, which is periodic at a proper frequency $f_p(L)$, function of the length L of said first fibre-optic coil (1144).

7. The interferometric measurement device (300) according to claims 4 and 5, wherein said modulation phase-shift $\phi_m$ has a biasing phase-shift component $\phi_b$, which is periodic at a proper frequency $f_p(L+L')$, function of the length L+L'.

8. The interferometric measurement device (100) according to one of claims 5 to 7, wherein said modulation phase-shift $\phi_m$ has a counter-reaction phase-shift component $\phi_r$ which is a stairstep modulation of duration $\tau_g(L)$, function of the length L of said first fibre-optic coil (1144).

9. A gyrometer including an interferometric measurement device (100; 200; 300) according to one of claims 1 to 8, the physical parameter ($\Omega_R$) to be measured being a component of the rotational speed of said gyrometer about an axis of rotation, the variation of the non-reciprocal phase difference $\Delta\phi_p$ being produced by the physical parameter ($\Omega_R$) to be measured by SAGNAC effect.

**10.** An inertial attitude or navigation unit including at least one gyrometer according to claim 9.

**11.** An electric current or magnetic field sensor including an interferometric measurement device according to one of claims 1 to 8, the variation of the non-reciprocal phase difference $\Delta\phi_p$ being produced by the physical parameter to be measured by FARADAY effect.

# Fig.1
(Art Antérieur)

# Fig.2
(Art Antérieur)

Fig.3

Fig.4

Fig.5

Fig.6

Fig.7

Fig.8

Fig.9

Fig.10

EP 2 972 086 B1

Fig.11

EP 2 972 086 B1

**EP 2 972 086 B1**

**Littérature non-brevet citée dans la description**

- Resonator Fiber-Optic Gyro with Bipolar Digital Serrodyne Modulation Scheme. **WANG et al.** 22nd International Conference on Optical Fiber Sensors. Proceedings of SPIE, 2012, vol. 8421